# EUROPEAN PATENT APPLICATION

(11) **EP 0 933 694 A1**
(43) Date of publication of application: **04.08.1999**
(21) Application number: 98932564.2
(22) Date of filing: 17.07.1998
(51) Int. Cl.: G06F 3/14

(54) **HIGH DEFINITION IMAGE DISPLAY AND PROGRAM STORAGE MEDIUM FOR THE DISPLAY**

(30) Priority: 18.07.1997 JP 19371597; 30.04.1998 JP 12036098
(71) Applicant: PFU LIMITED, Kahoku-gun Ishikawa 929-1192 (JP)
(72) Inventor: NOHARA, Toshihiro PFU Limited, Ishikawa 929-1192 (JP); TOYODA, Yasuhide, Kawasaki-shi Kanagawa 210-0913 (JP); IDA, Aturou, Kawasaki-shi Kanagawa 210-0913 (JP); INOUE, Katsuhito, Kawasaki-shi Kanagawa 210-0913 (JP); KUGASAWA, Keisuke, Saiwai-ku Kawasaki-shi Kanagawa 210-0913 (JP); SAKAGUCHI, Shuichi, Kahoku-gun Ishikawa 929-1192 (JP)
(74) Representative: Reichel, Wolfgang, Dipl.-Ing.
(86) International application number: JP9803216
(87) International publication number: WO9904331

(57) **Abstract**

A high-definition image display apparatus displays a high-definition mega-sized image on a computer display. The display apparatus includes a server 1 and a client 5 that operate in a coordinated manner. The display system comprises means for storing an cage in the server 1 in the form of a set of image data for several levels of resolution each of which is obtained through division of the image into a matrix as well as through compression and encryption; and input means for enabling visual performance of operations for specifying an image to be displayed on the screen of the client 5, zooming in/out, and scrolling the image.

## Description

### Field of the Invention

The present invention relates to a high-definition image display apparatus and a medium storing a program for implementing the display system, and more particularly, to a high-definition image display apparatus for storing a plurality of mega-sized high-definition images into auxiliary storage devices and retrieving and displaying a desired image on a computer display at high speed, as well as to a medium storing a program for implementing the display system.

### Background Art

In principle, displaying, zooming in/out, and scrolling of a mega-sized high-definition image on a computer display has conventionally required a main storage device capable of storing the entirety of the data corresponding to the mega-sized image. To address a case where the computer is equipped with a storage device having a capacity insufficient for storing the entirety of the image data, there has been developed a method of saving into an auxiliary storage device that portion of the image data which exceeds the memory capacity, as well as a method of partially displaying the image in split views.

According to the prior art, a main storage device having the capacity for storing mega-sized image data is required when a specific image is selected from a plurality of mega-sized high-definition images and a desired range of the thus-selected image is displayed.

If the capacity of the main storage device is insufficient for storing the image data, the computer must be equipped with an auxiliary storage device capable of compensating for a memory shortage. Further, repeated transfer of data between the main storage device and the auxiliary storage device involves a long latency time.

Use of only the portion of image data required for display is a conceivable measure for reducing the capacity of the main storage device. However, when the image is zoomed out until it fits into one screen, all the image blocks must also be zoomed out. Thus, zooming out the mega-sized image takes much time. Further, the number of image files increases as the size of an split image is reduced. In this way, the conventional method encounters difficulty in managing the image files.

An object of the present invention is to provide a high-definition image display apparatus which has a data structure for displaying a high-definition image at high speed within a predetermined period of time regardless of changes in designation of an image or in designation of a display field requested by a client and which has an image display function for selecting, transferring, and merging data.

Another object of the present invention is to provide a high-definition image display apparatus which has the function of generating. at high speed, a high-definition image of an arbitrary resolution required by a client.

Still another object of the present invention is to provide a medium storing a program for implementing a high-definition image display apparatus which has a data structure for displaying a high-definition image at high speed within a predetermined period of time regardless of changes in designation of an image or in designation of a display field requested by a client and which has an image display function for selecting, transferring, and merging data.

Yet another object of the present invention is to provide a medium storing a program for implementing a high-definition image display apparatus having the function of generating, at high speed, a high-definition image of an arbitrary resolution required by a client.

### Disclosure of the Invention

A high-definition image display apparatus according to the present invention which displays a mega-sized high-resolution image on a computer display and which includes a server and a client that operate in a coordinated manner. The display apparatus comprises means for storing an image in the server in the form of a set of image data for several levels of resolution each of which is obtained through division of the image into a matrix as well as through compression and encryption; and input means for enabling visual performance of operations for specifying an image to be displayed on the screen of the client, zooming in/out, and scrolling the image.

The high-definition image display apparatus according to the present invention enables high-speed zooming operations and a reduction in the number of image files by converting the image data to be stored in the server in the form of archive files each containing a set of divided blocks of an image having a different level of resolution. Further, the high-definition image display apparatus according to the present invention enables real-time manipulation of an image without involvement of operation delays stemming from having to wait for processing, by displaying a low-resolution image during the scrolling/zooming operations. Further, the high-definition image display apparatus according to the present invention enables selection of a desired image to be displayed from a plurality of images and is capable of providing a user interface that facilitates use of an image database.

The present invention enables provision of a medium storing a program which enables a computer serving as a high-definition image display apparatus to perform the aforementioned processing operations. Therefore, the computer that serves as the high-definition image display apparatus can perform the individual processing operations.

### BRIEF DESCRIPTION OF THE DRAWINGS

FIG. 1 is a diagram showing the principle and configuration of a high-definition image display apparatus according to the present invention, i.e., the configuration of a client/server system of the high-definition image display apparatus;
FIG. 2 is an illustration for describing archive-format image data and indication thereof;
FIG. 3 is an illustration for describing blocks constituting a file;
FIG. 4 is an illustration for describing transfer of image data from the server to the client;
FIG. 5 is an illustration showing a processing operation for transferring the blocks while the blocks are expanded in the form of image data;
FIG. 6 is an illustration showing a processing operation for transferring the blocks while they are maintained in JPEG format;
FIG. 7 shows a transfer flowchart according to an embodiment of the present invention;
FIG. 8 shows the transfer flowchart according to an embodiment of the present invention;
FIG. 9 shows the flow of processing (including a caching operation) according to the embodiment;
FIG. 10 shows the flow of processing (including a caching operation) according to the embodiment;
FIG. 11 is an illustration for describing the shift of a display image field at the time of displaying an image;
FIGs. 12I to 12IV are illustrations for describing caching operations;
FIG. 13 shows the flow of caching operations;
FIG. 14 shows the flow of caching operations;
FIG. 15 shows the flow of processing performed by the server;
FIG. 16 is an illustration for describing a block management area;
FIGs. 17I and 17II are illustrations for describing a control window indicated on the screen of the display device;
FIG. 18 shows an indication of the lowest-resolution file;
FIG. 19 shows thumbnail images displayed in a control window;
FIG. 20 shows an indication of a first intermediate-resolution file;
FIG. 21 shows split views;
FIG. 22 shows an indication of a resolution control;
FIG. 23 is an explanatory diagram for describing a reducing operation according to the present invention;
FIGs. 24A to 24D are explanatory diagrams for describing the reducing operation according to the present invention;
FIG. 25 shows a block correspondence table;
FIG. 26 is a reduction-scale conversion table;
FIG. 27 is an explanatory diagram for describing the reducing operation according to the present invention; and
FIG. 28 is the flow of processing for generating an image of desired resolution.

### BEST MODES FOR CARRYING OUT THE INVENTION

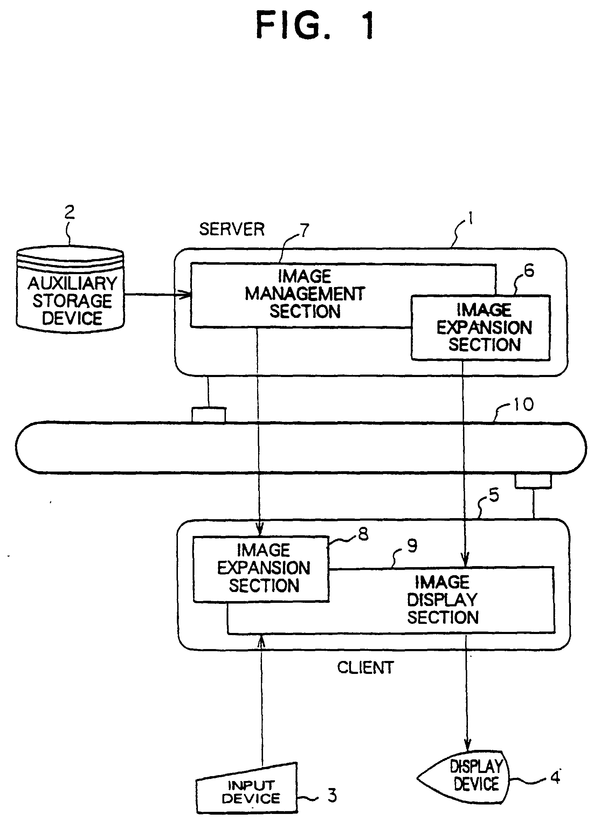

FIG. 1 is a diagram showing the principle and configuration of a high-definition image display apparatus according to the present invention. In FIG. 1, reference numeral 1 designates a server; 2 designates an auxiliary storage device; 3 designates an input device; 4 designates a display device; 5 designates a client; 6 designates an image expansion section; 7 designates an image management section; 8 designates an image expansion section; 9 designates an image display section; and 10 designates a communications line.

According to the present invention, for each of images to be stored in the server, images of different levels of resolution are prepared beforehand and each divided into a matrix form. Data of the thus divided images are encrypted and archived into archive files.

In the high-definition image display apparatus of the present invention, the server 1 includes the image expansion section 6, and the client 5 includes the image expansion section 8. The high-definition image display apparatus comprises means for dynamically determining the load exerted on the CPU of the server 1 and the load exerted on the CPU of the client 5, and means for re-compression. When expansion of the image is performed in the server 1, a portion of an image block required for display is clipped and re-compressed by the re-compression means. Further, the high-definition image display apparatus comprises means for saving the image used by a client 5 into an auxiliary storage device for the client 5, as well as for reading an image block beforehand by predicting the next operation on the basis of a past operation. The high-definition image display apparatus according to the present invention further comprises means for displaying, on a control window in the screen of the client 5, reduced views of the high-definition images that are being displayed and for carrying out continuous scrolling/zooming operations, and means for listing thumbnail images in a control window and switching among the images. The high-definition image display apparatus comprises means for indicating on the screen of the client 5 a ruler-like graphic on a high-definition image. The high-definition image display apparatus comprises means capable of splitting a screen into "n" blocks and manipulating "n" images at the time of displaying a high-definition image on the screen of the client 5. Further, the high-definition image display apparatus comprises means for recording/reproducing a display field at the time of displaying a high-definition image on the screen of the client 5. The high-definition image display apparatus further comprises means for moving a viewpoint at high speed by indicating low-resolution image data during operations when scrolling/zooming operations are performed within the control window of the client 5.

The high-definition image display apparatus according to the present invention enables high-speed indication during zooming operations and a reduction in the number of image files, by converting image data to be stored in the server 1 into archive files of different levels of resolution and which are divided into blocks. Further, the high-definition image display apparatus according to the present invention enables constant attainment of an optimum throughput, by comparing the load exerted on the CPU of the server 1 with the load exerted on the CPU of the client 5, by dynamically determining whether compressed image data blocks are to be decompressed by the server 1 or the client 5, and by reading an image block beforehand in the direction in which the image is being shifted, by means of predicting the next operation. Further, the high-definition image display apparatus according to the present invention enables real-time manipulation of an image without involvement of operation delays due to waiting for processing, by indication of a low-resolution image during scrolling/zooming operations. The high-definition image display apparatus according to the present invention further comprises means for a reduction-scale indication, screen splitting, and display of a list screen for the purpose of selecting an image to be displayed from a plurality of images, and enables provision of a user interface that facilitates use of an image database.

The present invention enables provision of a medium storing a program by which a computer serving as a high-definition image display apparatus executes the foregoing processing operations, thereby enabling the computer serving as a high-definition image display apparatus to execute the foregoing processing operations.

FIG. 1 shows the principle and configuration of the present invention; i.e., a client/server system of the high-definition image display apparatus according to an embodiment of the present invention.

Reference numeral 1 designates a server connected to the auxiliary storage device 2 for storing archive-format image data; 5 designates a client connected to both the input device 3 for designating a display image and permitting scrolling/zooming operations and the display device 4 for displaying a high-definition image; 6 designates the image expansion section for expanding a compressed image in the server 1; 7 designates the image management section for retrieving image data blocks from the auxiliary storage device 2; and 8 designates the image expansion section for expanding a compressed image in the client 5.

Reference numeral 9 designates an image display section for providing selection means which caches and reads an image data block beforehand, pastes the split images, and designates an image, as well as for providing an image to the display device. Reference numeral 10 designates a communications line connecting the server 1 to the client 5.

The archive-format image data stored in the auxiliary storage device 2 connected to the server 1 are converted into images of several different level of resolution, ranging from a lowest-resolution file - which is reduced such that the entire image can be displayed in one screen and is prepared with the lowest resolution - to a highest-resolution file prepared with the highest resolution.

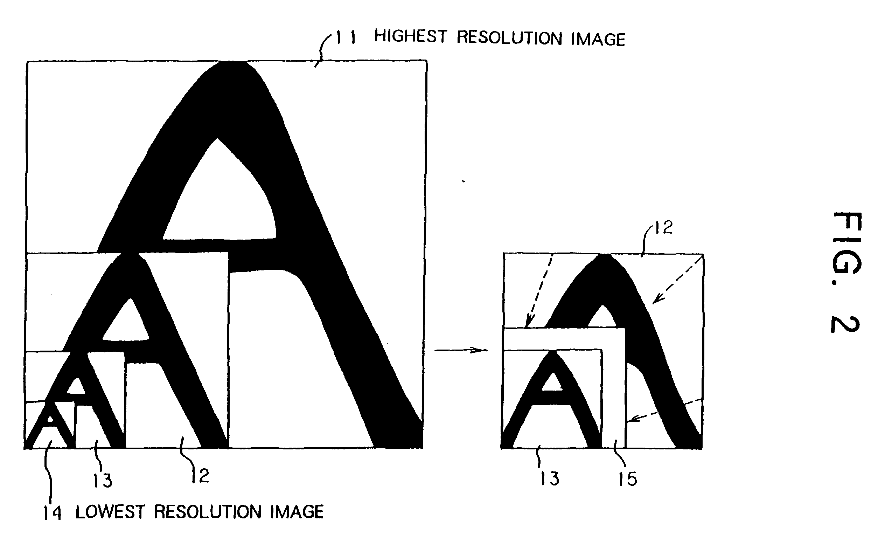

FIG. 2 is an illustration for describing archive-format image data and indication thereof. In the drawing, reference numeral 11 designates a highest-resolution file; 12 designates a first-intermediate-resolution file; 13 designates a second-intermediate-resolution file; and 14 designates a lowest-resolution file.

The highest-resolution file 11 corresponds to an image of 10,000 x 10,000 pixels; the first-intermediate-resolution file 12 corresponds to an image of 5,000 x 5,000 pixels; the second-intermediate-resolution file 13 corresponds to an image of 2,500 x 2,500 pixels; and the lowest-resolution film 14 corresponds to an image of 1,250 x 1,250 pixels. The resolution and the number of intermediate resolutions are not limited to the present example. The first-intermediate-resolution file 12 corresponds to the highest-resolution file 11 whose pixels are diminished in number to 1/2 in both vertical and horizontal directions.

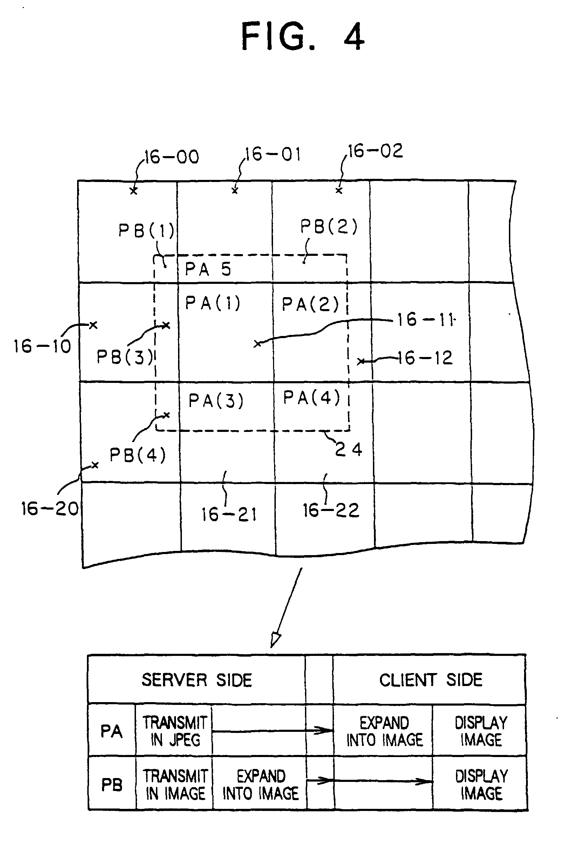

Four types of files shown in FIG. 4 are prepared for one image, e.g., an image of Buddha. If the client 5 requests to display an image corresponding to an illustrated image 15 (of 3,000 x 3,000 pixels) (having an arbitrary resolution), the images is prepared by diminishing the first-intermediate-resolution file 12 (which is larger than the file 15) in number of pixels to 3/5 in both the vertical and horizontal directions.

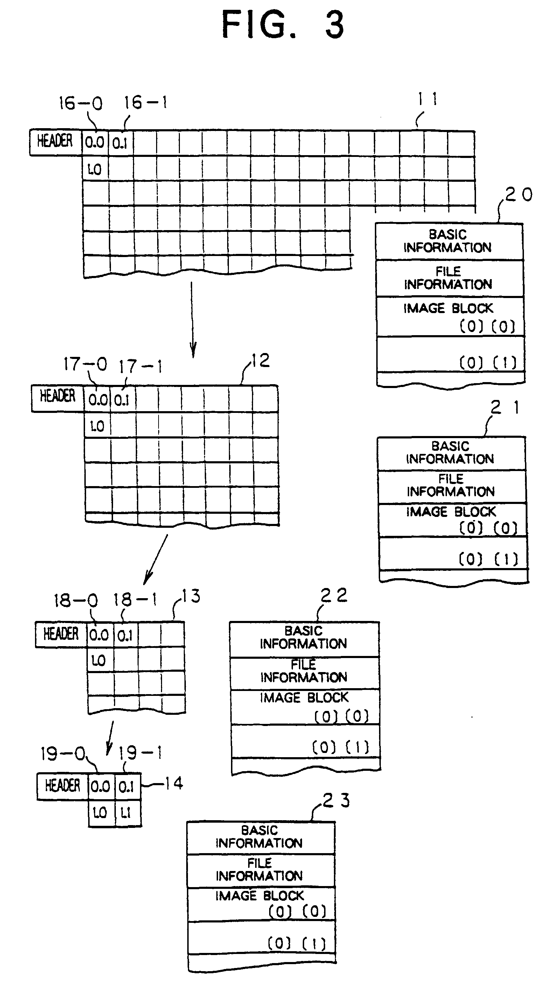

FIG. 3 is an illustration for describing blocks constituting the file. In the drawing, reference numerals 11, 12, 13, and 14 correspond to those of FIG. 2. Reference numeral 16-i designates blocks constituting the highest-resolution file 11; 17-i designates blocks constituting the first-intermediate-resolution file 12; 18-i designates blocks constituting the second-intermediate-resolution file 13; 19-i designates blocks constituting the lowest-resolution file 14; 20 designates hold information corresponding to the highest-resolution file 11; 21 designates hold information corresponding to the first-intermediate resolution file 12; 22 designates hold information corresponding to the second-intermediate-resolution file 13; and 23 designates hold information corresponding to the lowest-resolution file 14.

Each of the files 11, 12, 13, and 14 is held while divided into blocks of p x p pixels, and access is made on a per-block-basis. The blocks 16-i, 17-i, 18-i, and 19-i differ from one another in content but are equal in terms of the number of pixels in the vertical and horizontal directions. In fact, no problems arise even if the blocks 16-i to 19-i which are located in the corresponding locations in the files 11 to 14 have different sizes, and therefore such a difference in size is allowed. Similarly, no problem arises even when the number of pixels in the vertical direction differs from that in the horizontal direction.

The hold information 20 comprises (i) "basic information" describing an image (for example, an image of Buddha or a thumbnail image) to which the hold information 20 corresponds; (ii) "file information" describing that the file is, e.g., the highest-resolution file 11; (iii) "management information relating to an image block of [0][0]" representing that the retained information corresponds to, e.g., a block at coordinates [0][0]; (iv) "management information relating to an image block of [0][1] representing that the retained information corresponds to a block at coordinates [0][1]; and (v) ... The same applies to the hold information 21, the hold information 22, and the hold information 23.

The server 1 transfers data to the client 5 on a per-image-block-basis. Regardless of whether the image data are JPEG image data or image data resulting from expansion of JPEG image data, the image data are transferred to the client 5 from the server 1 while being encrypted and compressed. The client 5 uses the image data after decrypting and expanding the received image data.

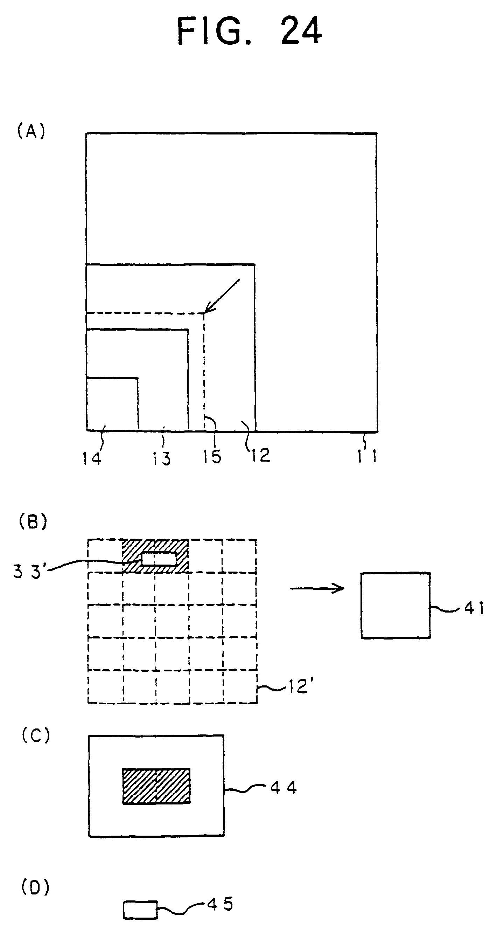

FIG. 4 is an illustration for describing transfer of image data from the server 1 to the client 5. In the drawing, reference numeral 16-ij designates the block shown in FIG. 3; and 24 designates a display frame (i.e., the frame of a display screen) of the display device of the client 5.

Provided that - as indicated by a dotted line in the drawing - the display frame 24 of the client 5 corresponds to a portion of a block 16-00, a portion of a block 16-01, a portion of a block 16-02, a portion of a block 16-10, the entirety of a block 16-11, a portion of a block 16-12, a portion of a block 16-20, a portion of a block 16-21, and a portion of a block 16-22, image data regarding the images of the individual blocks related to the display frame 24 are transferred to the client 5.

In this case, according to the present invention,
(i) in a case where, like the block 16-11, one block is wholly included in the display frame 24 - i.e., PA(1); or
(ii) in a case where, like the blocks 16-01, 16-12, 16-21, and 16-22, the proportion of the portion of one block included in the display frame 24 is greater than a predetermined threshold value - i.e., PA(5), PA(2), PA(3), and PA(4), the server 1 transfers the entire block(s) to the client 5 while maintaining the same JPEG format, because the proportion is greater than the threshold value.
(iii) In a case where, like the blocks 16-00, 16-02, 16-10, and 16-20, the proportion of the portion of one block included in the display frame 24 is less than a predetermined threshold value; i.e., PB(1), PB(2), PB(3), and PB(4), the server 1 expands image data relating to a block of interest to an image and transfers to the client 5 image data relating to only the portion of the block included in the display frame 24, because the proportion is less than the threshold value.

It goes without saying that the server 1 transfers image data to the client 5 after the image data are encrypted and compressed, regardless of whether the image data are JPEG image data or the image data resulting from expansion of the JPEG image data. Further, needless to say, the data received by the client 5 are used after being expanded and decrypted.

According to the present invention, an image is retained in the form of, e.g., a JPEG (Joint Photograph Expert Group) image, in the auxiliary storage device 2 shown in FIG. 1. However, the standard under which an image is stored is not limited to JPEG. JPEG is one standard for compressing an image, is designed to compress a full-color natural (scenic) image and a gray scale image, and is effective for use with a photograph or art work but is not necessarily suitable for a line drawing. Further, JPEG is used for only a still image.

JPEG is designed by utilization of the characteristic that the human eye perceive a small variation in color with less sensitivity than it perceives a small variation in brightness. JPEG is effective means because it enables compression of. for example, a 2-Mbyte full-color image file to a 100-Kbyte file, and storage of full-color data [24 bites/pixel (i.e., 1.6 x 10⁷ colors)].

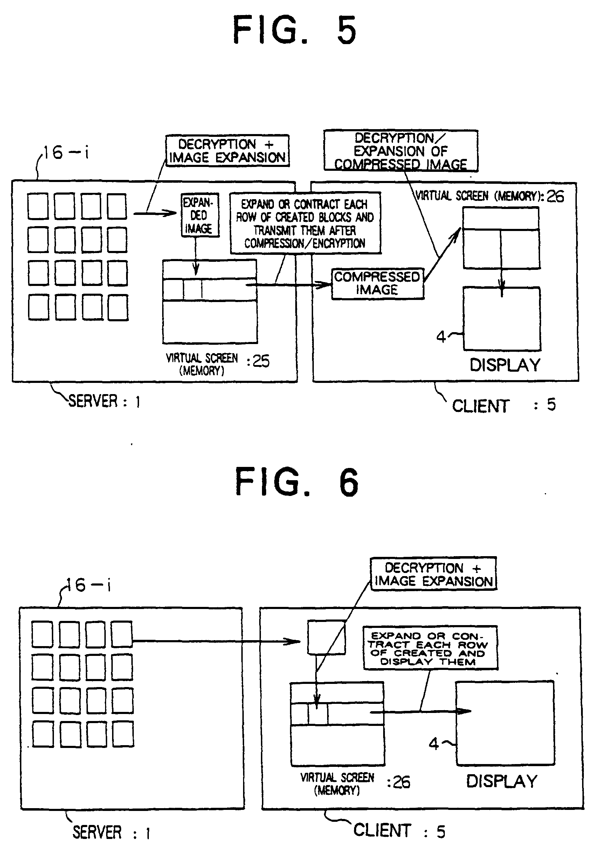

FIG. 5 shows transfer of blocks while they are expanded to image data. FIG. 6 shows transfer of blocks while they are maintained in JPEG format. In the drawings, reference numerals 1, 4, 5, and 16 correspond to those reference numerals shown in FIG. 1. Further, each of reference numerals 25 and 26 represents a virtual screen (memory).

In the case shown in FIG. 5, the server 1 decrypts a JPEG image relating to the block 16-i and expands the thus-decrypted image to image data. The thus-expanded image data are indicated in the virtual screen 25. Data regarding one row of the image in the virtual screen 25 are subjected to, e. g., expansion or contraction and compression/encryption, and are then transmitted. In the client 5, the transmitted information is decrypted and expanded on a virtual screen 26 to be displayed on the display device (display) 4.

In the case shown in FIG. 6, the JPEG image relating to the block 16-i is transmitted as is to the client 5. In the client 5, the received JPEG image is decrypted and expanded (expanded into image data) in order to be disposed on the virtual screen 26. Data regarding one row of the image in the virtual screen 26 are subjected to expansion or contraction and are then displayed on the display device (display) 4.

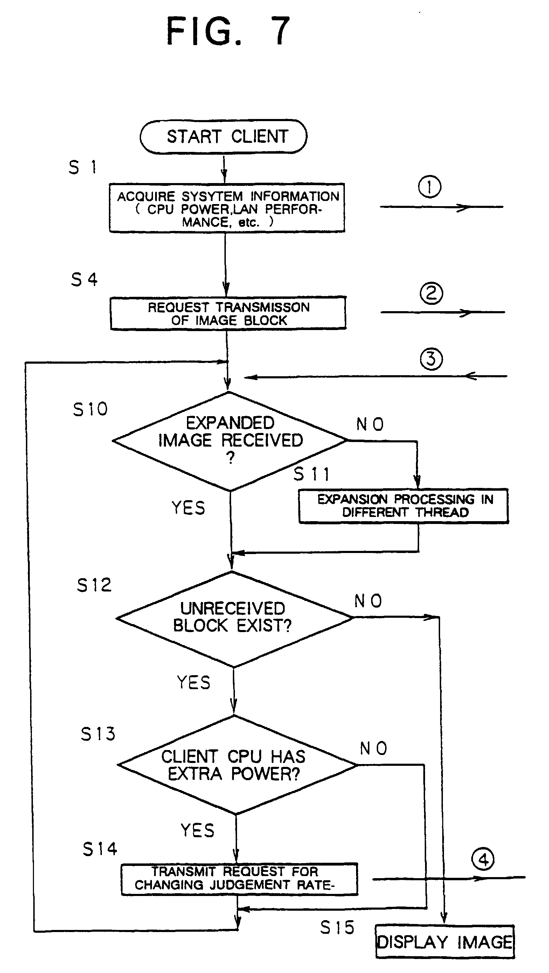

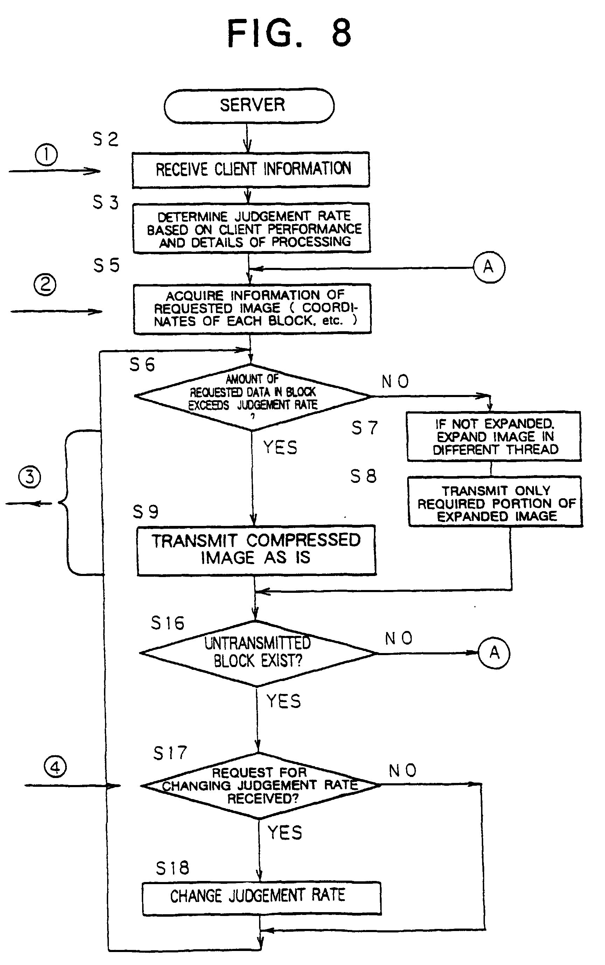

FIGs. 7 and 8 constitute a single transfer flowchart according to the embodiment of the present invention. (Step S1): When the client 5 is activated, system information regarding the client 5 is acquired and is transferred to the server 1.
(Step S2): The server 1 receives the client information.
(Step S3): From the performance of the client 5 and details of processing operations thereof, a threshold value (i.e., a JUDGEMENT RATE) is determined in relation to whether a block is transferred while image data regarding the block are maintained in JPEG format (like PA) or in the image data resulting from expansion of the JPEG image (like PB).
(Step S4): The client 5 requests to transfer a desired image block.
(Step S5): The server 1 finds blocks to be transferred (i.e., the server 1 acquires the coordinates of each image block).
(Step S6): A determination is made as to whether or not requested data regarding individual blocks exceed the threshold value (i.e., the JUDGEMENT RATE).
(Step S7): If the result of Step 6 is NO and if the requested data have not yet been expanded, the data are expanded to image data through parallel processing.
(Step S8): Of the block expanded to the image data, only the portion of the block corresponding the requested data is transferred.
(Step S9): If the result of Step S6 is YES, the data regarding the block are transferred while being maintained in JPEG format.
(Step S10): Upon receipt of the data regarding the desired block, the client 5 checks whether or not the thus-received block is an image expanded from the image data.
(Step S11): If the result of Step S10 is NO, the block is expanded to an image through parallel processing.
(Step S12): If the result of Step S10 is YES, or when the block is expanded to an image in Step S11, a check is made as to whether or not there still remain blocks which have not yet been received.
(Step S13): If the result of Step S12 is YES, a check is made as to whether or not the CPU of the client 5 has sufficient capacity to perform additional processing operations. If the result of this check is NO, the processing returns to Step S10.
(Step S14): If the result of Step S13 is YES, the threshold value (i.e., the JUDGEMENT RATE) is changed, and the proportion of the block which is transferred from the server 1 while being maintained in JPEG format is increased. In short, the client sends a request to change the JUDGEMENT RATE.
(Step S15): If the result of Step S12 is NO, an image is displayed.
(Step S16): The server 1 checks whether or not there still remain blocks which have not yet been transferred after the processing operations in Steps S8 and S9. If the result of this check is NO, the processing returns to Step S5.
(Step S17): If the result of Step S16 is YES, the processing proceeds to Step S17 and a check is made as to whether or not the client 5 has requested to change the JUDGEMENT RATE. If the result of Step S17 is NO, the processing returns to Step S6.
(Step S18): If the result of Step S17 is YES, the JUDGEMENT RATE is changed, and the processing returns to Step S6.

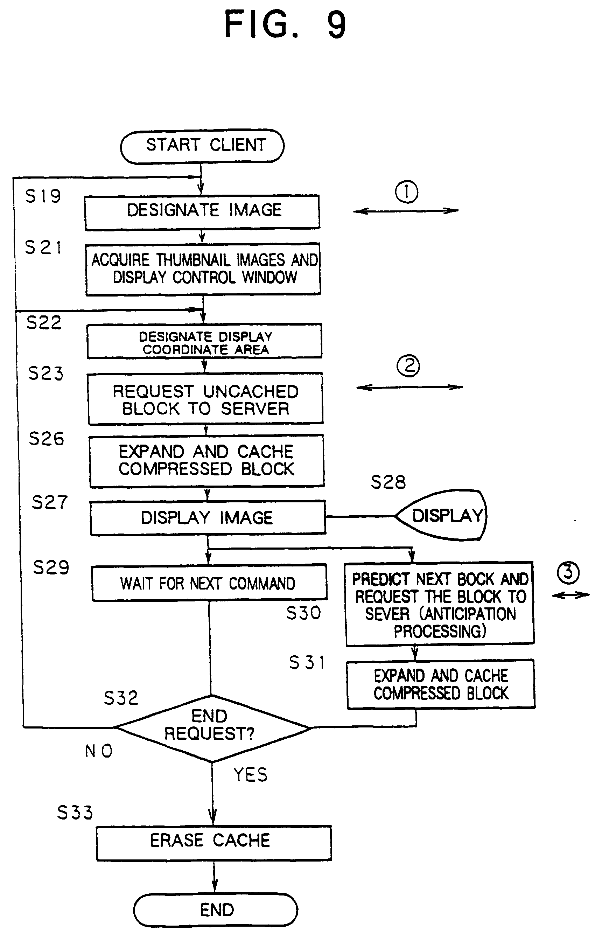

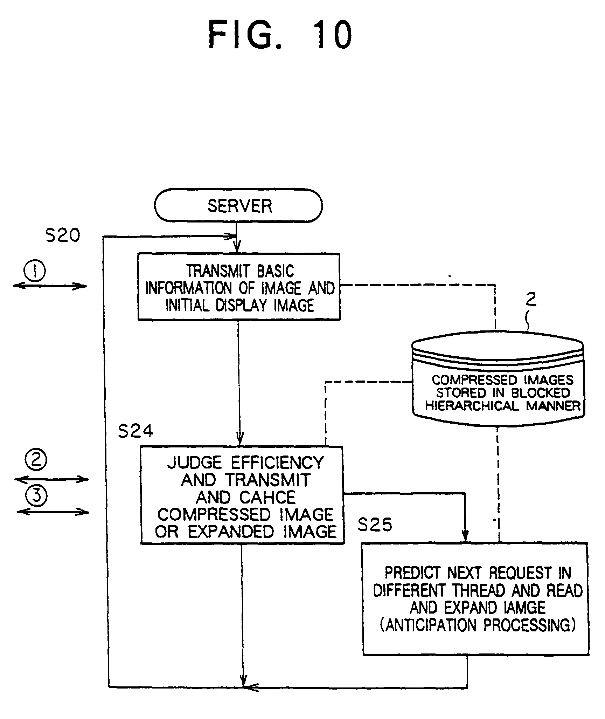

FIGs. 9 and 10 constitute a single processing flowchart (including a caching operation) according to the embodiment of the present invention.

The processing flow shown in FIGs. 7 and 8 represents processing required for transferring each block, whereas FIGS. 9 and 10 represent the overall processing required for displaying an image.
(Step S19): While the client 5 is in an active state, the image the client 5 desires to display is specified. As shown in FIG. 10, in response to the designation of the image, the server 1 performs processing relating to Step S20.
(Step S20): The server 1 fetches the basic information relating to a designated image and an initial image from the memory 2 (corresponding to the auxiliary storage device shown in FIG. 1) and sends the thus-fetched information and the initial image to the client 5.
(Step S21): The client 5 acquires a thumbnail image from the server 1 and indicates the thus-acquired thumbnail image in the control window on the screen of the display device. The thumbnail image signifies a reduced view of an image. In the present case, if a designated image is a specific image of Buddha, the server 1 transfers as initial display images thumbnail images relating to the specific image of Buddha, such as a front view, side views, a rear view, a top view, and partial views of the image. As a matter of course, when the specific image of Buddha is designated, another specific image of Buddha relevant to the specific Buddha may be transferred as a thumbnail image.
(Step S22): The operator of the client 5 designates a coordinate field of an image to be indicated on the display device. For example, the operator designates that only the head of the Buddha is to be indicated.
(Step S23): If blocks included in the thus-designated field are not cached in cache memory of the client 5 in response to the designation made in Step S22, the client sends a request to the server 1 for transferring the blocks. In contrast, if the blocks have already been cached in the cache memory, the processing proceeds to Step S26.
(Step S24): Upon receipt of the request in Step S23, the server 1 determines whether the blocks are to be transferred in the form of JPEG images or expanded images, in consideration of transmission efficiency. The server 1 transfers either JPEG images or expanded images to the client 5. The server 1 also caches the images into its own cache memory. In this case, consideration of transmission efficiency corresponds to the determination of transmission efficiency on the basis of the threshold value (JUDGEMENT RATE) described with reference to FIGs. 4, 5, 6, 7, and 8. Even in Step S24, the server 1 refers to the illustrated memory 2.
(Step S25): The server 1 predicts the next operation from the operation of the client 5 through parallel processing, and in an anticipative manner reads from the memory 2 a block which would be required. Such anticipative reading of a block will be described later.
(Step S26): The client 5 expands an image of a required block if the block has not yet been expanded to an image, thereby rendering the image displayable.
(Step S27): Processing for the purpose of displaying the image is performed.
(Step S28): The image is displayed.
(Step S29): The client 5 waits for the next command from the operator.
(Step S30): In response to the zooming or scrolling operation performed by the operator through activation of a mouse or the like, the next block which would be required is predicted. If the client 5 does not have such a block, the client 5 requests the server 1 to send the block.
(Step S31): In Step S30, upon receipt of the JPEG image from the server 1, the client expands the image into image data and caches the thus-expanded image data into the cache memory.
(Step S32): A check is made as to whether or not the indication of the image has been completed. If the result of the check is NO, the processing returns to Step S19 or S22. If the processing returns to Step S19, another specific image of Buddha, for example, is displayed. In a case where the processing returns to Step S22, for example, another field of the image of Buddha that is currently indicated is displayed.
(Step S33): If the result of Step S32 is YES, the contents of the cache memory are erased.

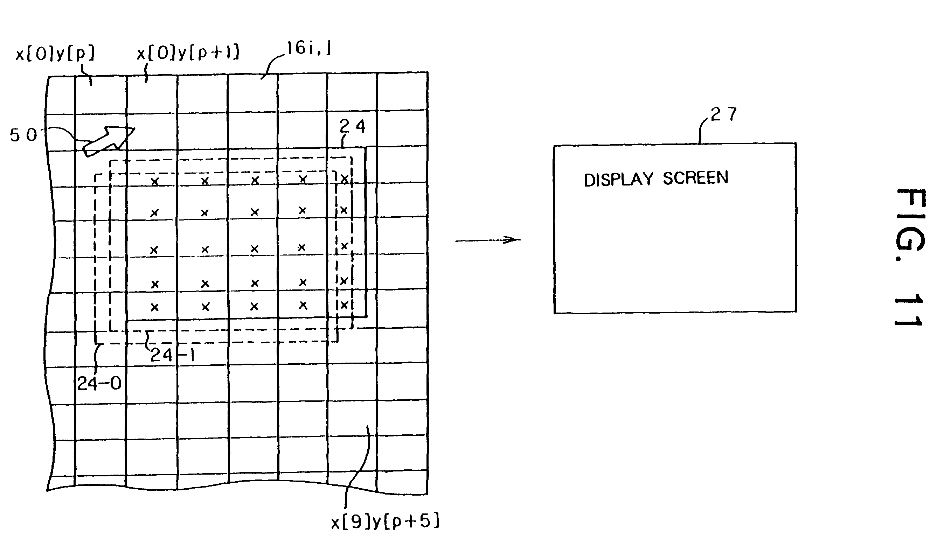

FIG. 11 is an illustration for describing the shift of a display image field at the time of displaying an image. In the drawing, reference numerals 16 and 24 correspond to those shown in FIG. 4, and reference numeral 27 designates a display screen.

Provided that the blocks 16-i,j are present so as to form a matrix pattern and that a partial image surrounded by the display frame 24 shown in the drawing must be displayed on the client 5 side, blocks assigned symbol "x" are transferred to the client 5 and displayed on the display screen 27 shown in the drawing.

Even if the blocks included in the display frame 24 have already been transferred and displayed, when the operator of the client 5 is performing zooming or scrolling operations, desirably the client 5 requests beforehand that the server 1 send the next blocks which would be required in association with the zooming or scrolling operations. For this reason, anticipative reading of a block is carried out.

In FIG. 11, the field encompassed by the display frame 24-0 is shifted to a display frame 24-1 and further to a display frame 24. According to the present invention, the next block which would be required in the next step is determined through prediction on the basis of the screen displayed before the current screen and the screen displayed before that screen. More specifically, there is predicted the direction toward which a block which would be required in the next step. In the case shown in FIG. 11, the display field appears to move in the direction designated by hollow arrow 50.

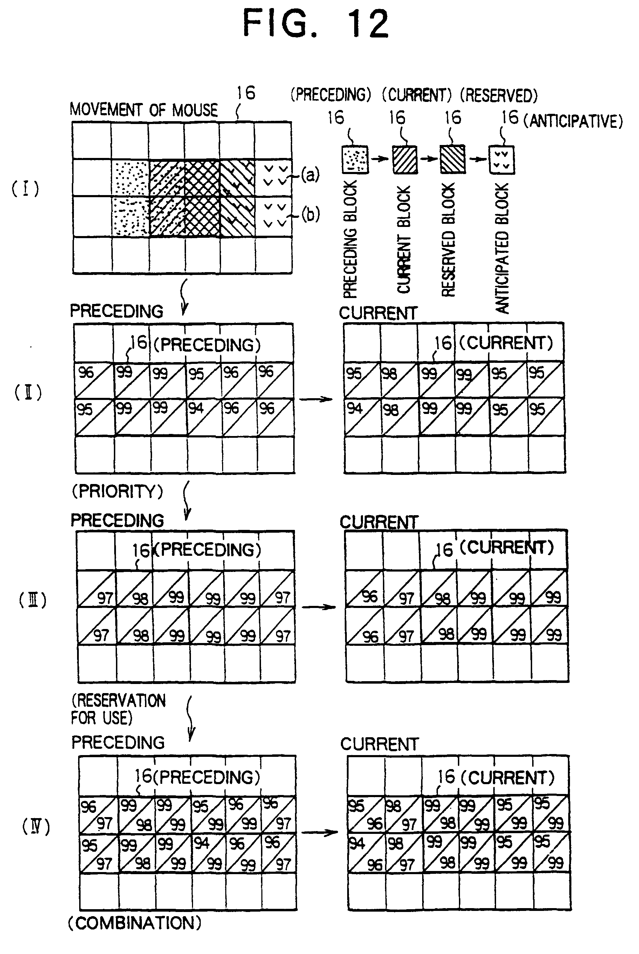

FIGS. 12(I) to 12(IV) are illustrations for describing caching operations. In the drawings, reference numeral 16 designates a block. Reference numeral 16(current) designates a block that is currently displayed; 16(preceding) designates a block displayed in the step preceding the current step; 16(reserved) designates a block which would be displayed in the next step; and 16(anticipative) designates a block which would be displayed in the step after the next step.

As shown in FIG. 12(I), provided that the display field is shifted in a leftward direction in the drawing and that the block 16(current)(diagonally hatched from upper right to lower left) is displayed at the current point in time when the mouse is being move in the leftward direction, the direction in which the display field is shifted is determined by means of the algorithm described by reference to FIG. 11. The client 5 acquires the reserved block 16(reserved) and the anticipative block 16(anticipative) and stores these blocks in the cache memory. As a matter of course, if the blocks are already present in the cache memory, the blocks are not required to be fetched again from the server 1.

FIG. 12(II) shows variations in the priority of the blocks that are present in the cache memory. In this drawing, a diagram denoted by "preceding" shows the priority levels assigned to the individual blocks by means of numerical values "0" to "99" when the preceding block 16(preceding) was displayed in a step preceding the current step. Further, a diagram denoted by "current" shows priority levels assigned to individual blocks when the current block 16(current) is displayed in the current step.

The priority levels are assigned to the individual blocks by use of numerical values "0" to "99," and the numerical values are incremented or decremented according to the following rules:
(i) Blocks which are currently displayed are assigned the highest value "99." Further, the blocks newly loaded into the cache memory are also assigned the numerical value "99."
(ii) Blocks which are not currently displayed are assigned numerical values which are obtained by subtracting one from their numerical values in the preceding step.

As can be seen from application of the foregoing rule, in the "preceding" state shown in FIG. 12(II), the block 16(preceding) (which was displayed in the step preceding the current step) is assigned numerical value "99." Provided that the remaining blocks are assigned numerical values "96," "95." and "94." the block 16(current) in the "current" state shown in FIG. 12(II) is assigned numerical value "99," and the remaining blocks are assigned numerical values which are obtained by subtracting one from their numerical values in the preceding step.

In this way, during the course of progress of the processing steps, the priority levels assigned to the blocks that are present in the cache memory are changed.

FIG. 12(III) shows variation in the reservation-for-use level of each of the blocks which are present in the cache memory. In this drawing, a drawing denoted by "preceding" shows the reservation-for-use levels assigned to the individual blocks by use of numerical values "0" to "99" when the preceding block 16(preceding) was displayed in a step preceding the current step. Further, a drawing denoted by "current" shows the reservation-for-use levels assigned to the blocks when the current block 16(current) is displayed in the current step.

Although the reservation-for-use levels corresponding to the individual blocks are assigned numerical values "0" to "99," the numerical values are incremented or decremented according to the following rules.
(iii) The blocks that are currently displayed are assigned the highest value "99."
(iv) A block which would be displayed in the next step [i.e., the reserved block 16(reserved)] is assigned the highest value "99."
(v) A block which would be displayed in the step after the next step [i.e., the anticipative block 16(anticipative)] is assigned the highest value "99."
(vi) The blocks other than the blocks pointed out in the sections (iii), (iv), and (v) are assigned numerical values which are obtained by subtracting one from their numerical values in the preceding step.

Provided that the current block 16(current), the reserved block 16 (reserved), and the anticipative block 16(anticipative) are the assigned numerical value "99" in the state (preceding) shown in FIG. 12(III). Also, attention must be paid to the fact that, for example, the current block 16 (current) in the "preceding" state corresponds to the preceding block 16(preceding) in the "current" state. In this situation, when the blocks are shifted to the "current" state, the rules (iii) to (vi) are applied, thereby assigning numerical value "99" to the current block 16(current), the reserved block 16(reserved), and the anticipative block 16 (anticipative), respectively. The remaining blocks are assigned numerals which are obtained by subtracting one from their numerical values in the preceding step.

FIG. 12(IV) shows blocks stored in the cache memory by combination of the priority levels shown in FIG. 12(II) with the reservation-for-use levels shown in FIG. 12(III). The numeral provided in the upper left portion of each of the blocks in the cache memory represents a priority level, and the numeral provided in the lower right portion of the block represents a reservation-for-use level.

As mentioned above, each of the blocks stored in the cache memory is assigned a priority level and a reservation-for-use level. For example, if blocks corresponding to the anticipative block 16(anticipative) are not present in the cache memory and are newly loaded to the cache memory, each of the blocks is assigned priority level "99" and a reservation-for-use-level "99."

If no memory are is available in the cache memory when there arises a necessity for loading new blocks into the cache memory, the blocks that have been sorted according to numerical values of reservation-for-use levels and that are assigned the same use levels are further sorted according to numerical value of priority level. Blocks are eliminated from the group of thus-sorted blocks until required memory becomes available. More specifically, the block eliminated first is a block which is assigned the lowest priority level in the group of blocks assigned the lowest numerical value of reservation-for-use level.

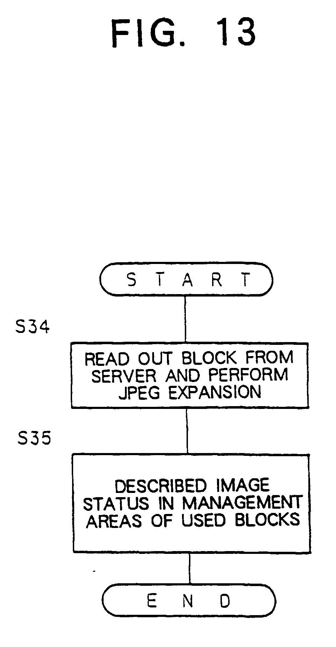

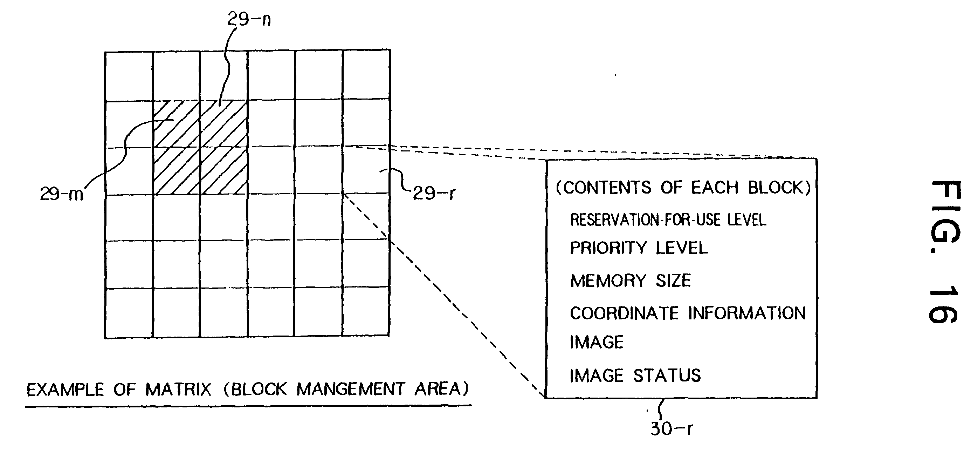

FIG. 13 is a processing flow which represents a caching flow and corresponds to the management of processing required when blocks are loaded to the client from the server 1. (Step S34): Blocks are read from the server 1 and expanded. (Step S35): An "image status," which will be described by reference to FIG. 16, is described in the area for managing the blocks loaded into the cache memory. The term "image status" corresponds to information regarding whether the image is transferred from the server 1 while being in JPEG format or in the form of expanded image data.

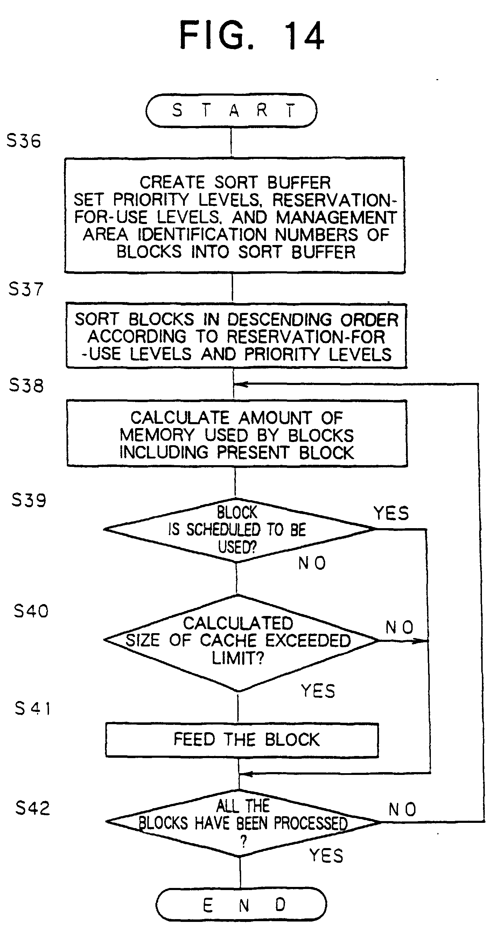

FIG. 14 is a caching flow relating to management of freeing of the cache memory.
(Step S36): A sort buffer is prepared for managing the blocks loaded in the cache memory. (i) priority levels assigned to the blocks, (ii) reservation-for-use levels assigned to the blocks, and (iii) management area identification numbers are set in the areas of the sort buffer corresponding to the individual blocks.
(Step S37): The blocks are sorted in descending numerical order according to the reservation-for-use levels. Blocks assigned the same reservation-for-use levels are further sorted in descending numerical order according to priority level (i.e., the blocks are arranged in descending order from the maximum value).
(Step S38): The block is taken out of the sort buffer in descending numerical order according to priority level, and the amount of cache memory used by the blocks including the thus-extracted block is calculated.
(Step S39): If the thus-extracted block is scheduled to be used (YES), the processing proceeds to Step S42. In contrast, if the block is not scheduled to be used (NO), the processing proceeds to Step S40. If YES, the block is scheduled to be used. Hence, even if the calculated amount of cache memory exceeds the capacity of the cache, the "cache memory is not freed," despite the cache capacity being exceeded.
(Step S40): A check is made as to whether or not the capacity of cache memory calculated in Step S38 exceeds a limit value of cache capacity. Specifically, a check is made as to whether or not blocks not scheduled to be used must be eliminated from the cache memory. If NO, the processing proceeds to Step S42. If YES, the processing proceeds to Step S41.
(Step S41): The block is freed, and the memory space required by the block is subtracted from the amount of memory calculated in Step S38.
(Step S42): A check is made as to whether or not all the blocks are processed. If NO, the processing returns to step S38. If YES, the processing ends.

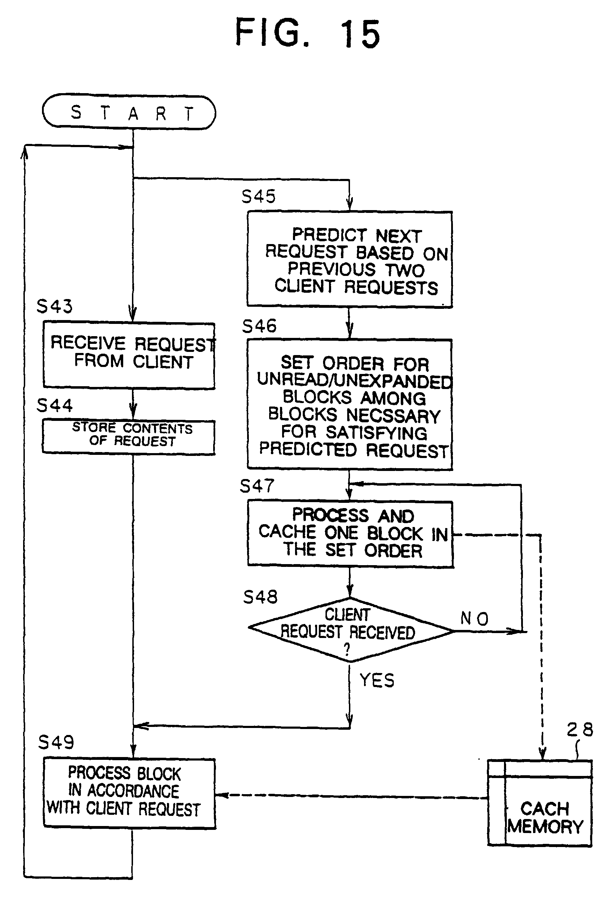

   FIG. 15 shows the flow of processing performed by the server 1.
(Step S43): The server 1 receives a request from the client 5.
(Step S44): The thus-received request is recorded and stored. As a matter of course, at the time of recording and storing the request, there is recorded and stored information regarding (i) which image is displayed, (ii) which resolution is used to display the image, and (iii) which portion of the image is displayed.
(Step S45): Independently of the processing operations performed in Steps S43 and S44, the server 1 predicts a request which would be required in the next step, on the basis of the request made by the client 5 in the previous step and the request made by the same in the step immediately before the previous step. More specifically, the server predicts the position of the display frame 24 in the current step through examination of shifting of the display frame 24 in the direction designated by hollow arrow 50, as described with reference to, e.g., FIG. 11.
(Step S46): A processing sequence is set with regard to blocks which are required for satisfying the predicted requests and have not yet been loaded to the client 5 or blocks which have not yet been expanded to image data.
(Step S47): Blocks are processed one by one according to the processing order, and the thus-processed block is stored in the cache memory of the server 1. The cache memory of the server 1 performs the same processing as performed by the cache memory of the client 5, as described with reference to FIG. 14.
(Step S48): A check is made as to whether or not the server has received the request from the client 5. If NO, the processing returns to Step S47. If YES, the processing proceeds to Step S49.
(Step S49): Processing is performed according to the request from the client 5.

FIG. 16 is an illustration for describing a block management area. In the drawing, reference numeral 29 designates a block management areas corresponding to an individual block; and 30 designates the contents of the block management area 29.

For example, a block management area 29-r contains contents denoted by 30-r; namely,
(i) The reservation-for-use level of the block - already described
(ii) The priority level of the block - already described
(iii) Memory size of the block - the memory size of the block is described, because the individual blocks differ slightly in size.
(iv) coordinate information regarding the block - coordinate information regarding the file 11, 12, 13, or 14 shown in FIG. 13 is described.
(v) Image data of the block - in JPEG format or in the form of image data
(vi) Image status - a description as to whether the block has been transferred from the server 1 in JPEG format or in the form of image data.

The reservation-for-use level and the priority level within the block management area are incremented or decremented in the manner as previously described with reference to FIG. 12.

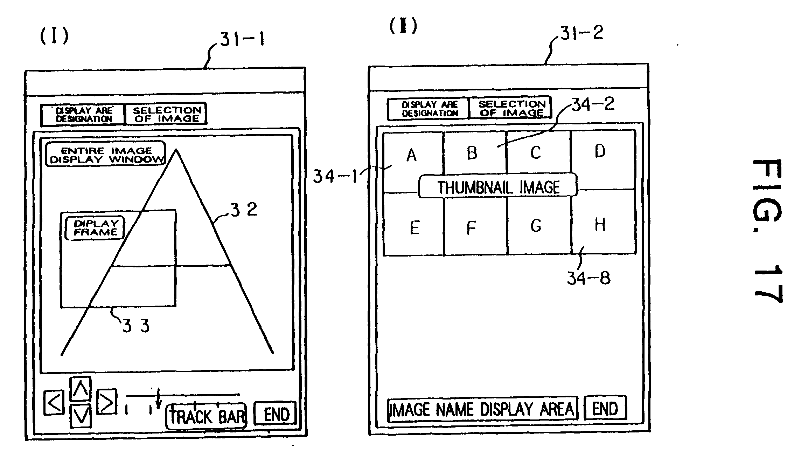

FiGs. 17(I) and 17(II) are illustrations for describing control windows in the screen of the display device. A window 31-1 shown in FIG. 17(I) represents an example of a control window displayed along with an ordinary indication. A window 31-2 shown in FIG. 17(II) represents an example of a control window when thumbnail images are displayed.

The position on the screen of the display device where the control window is indicated will be described later. Provided that, for example, an image A is displayed as a display image in the control window 31-1, the entire image 32 of the image A is reduced until it fits into the field of the control window. in other words, the image A 32 is displayed in an "entire image display window." In the case where the image A is currently displayed on the screen of the display device, a display frame 33 is overlaid on the image A 32 in order to indicate the portion of the image A that is currently displayed as a display image. On the screen of the display device, a portion of the file 11 shown in FIG. 2 may be displayed, a portion of the file 12 may be displayed, a portion of the file 13 may be displayed, or the entirety of the file 14 may be displayed. The images differ in size from one another. Accordingly, the size of the display frame 33 varies according to the file corresponding to the image that is currently displayed. More specifically, even if a file to be displayed is changed, the image 32 displayed in the control window assumes the same size, and therefore the size of the display frame 33 varies. Since the size of the display frame 33 is determined through computation, the size of the display frame 33 also represents the degree of reduction of the image displayed on the screen. Taking advantage of this, according to the present invention, the reduction scale is indicated together with a display image to thereby inform the operator of the size of each portion of the display image that is currently displayed, as will be described later.

As mentioned previously, various thumbnail images are transferred from the server 1, and these thumbnail images are displayed in the control window 31-2 shown in FIG. 17, such that all thumbnail images 34-i are displayed at one time, or a plurality of thumbnail images 34-i are displayed at one time. The operator can provide an instruction for displaying another image in place of the image that is currently displayed, through use of the mouse. For example, if the operator desires to display an image B in place of the image A, the operator points the cursor at the thumbnail image 34-2 of the image B by use of the mouse. The processor of the client 5 operates so as to display the image B. As a matter of course, when blocks required for displaying the image corresponding to the image B are not present in the cache memory, the client 5 makes a request to the server 1 for transferring the blocks.

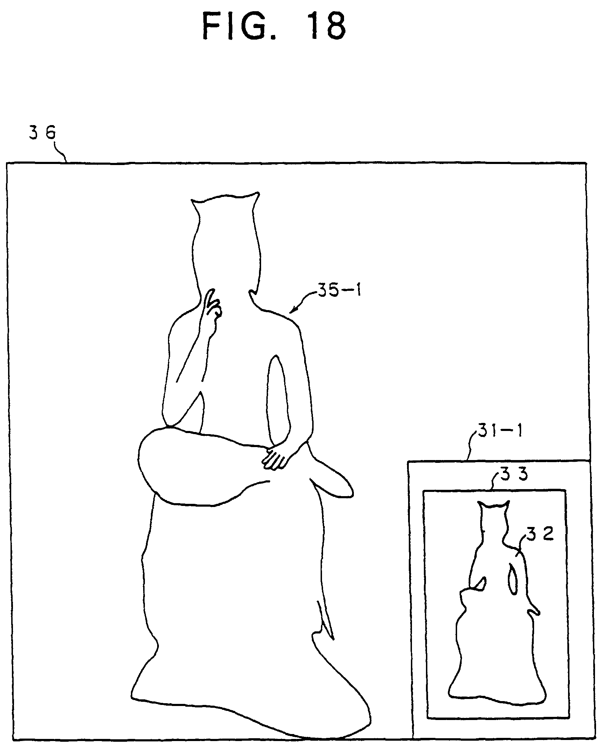

FIG. 18 is a diagram showing a state in which a lowest-resolution file is displayed. In the drawing, reference numerals 31, 32, and 33 correspond to those shown in FIG. 17, and reference numeral 35 designates a lowest-resolution image; and 36 designates a display screen.

In the control window 31-1, there is displayed an image 32 that corresponds to the entirety of a specific image of Buddha 35-1 which is currently displayed on the display screen 36 (in the form of a lowest-resolution image). In order to clearly show the relationship between the image 32 representing the entirety of Buddha and the image 35 that is currently displayed on the display screen 36, the display frame 33 is overlaid on the screen.

In FIG. 18, the display frame 33 is displayed so as to encompass the entire image 32, and hence the image 35 displayed in the display screen 36 represents the entire image of Buddha. The entirety of the image corresponding to the lowest-resolution file may be considered to assume a size which enables the image to be displayed on the display screen 36 as a single block.

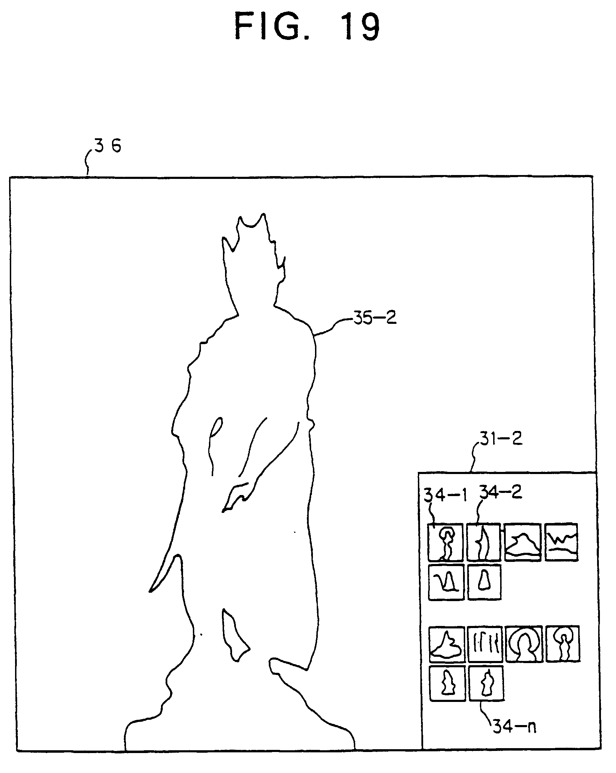

FIG. 19 shows thumbnail images when they are displayed in the control window. In the drawing, reference numeral 31 designates a control window; 34 designates thumbnail images; 35 designates an image; 35-2 designates one specific image of Buddha pertaining to the image 35; and 36 designates a display screen.

A plurality of images relating to one specific image (i.e., the image of Buddha 35-2), such as the full front view and side views of the image, are indicated in unison in the form of images of the size of a thumbnail, i.e., thumbnails 34-i. Thumbnail images of another specific image of Buddha 35-1 relevant to the Buddha 35-2 are also displayed in unison, as required.

Although FIG. 19 shows the lowest-resolution image of the Buddha 35-2 on the display screen 36, an image other than the lowest-resolution image; for example, a first-intermediate-resolution image, may also be displayed.

When an operator instructs the client 5 to display an image by designating one of the thumbnail images in the control window 31-2 shown in FIG. 19 through use of a mouse or the like, the image corresponding to the selected thumbnail image is displayed on the display screen 36 as an image 35.

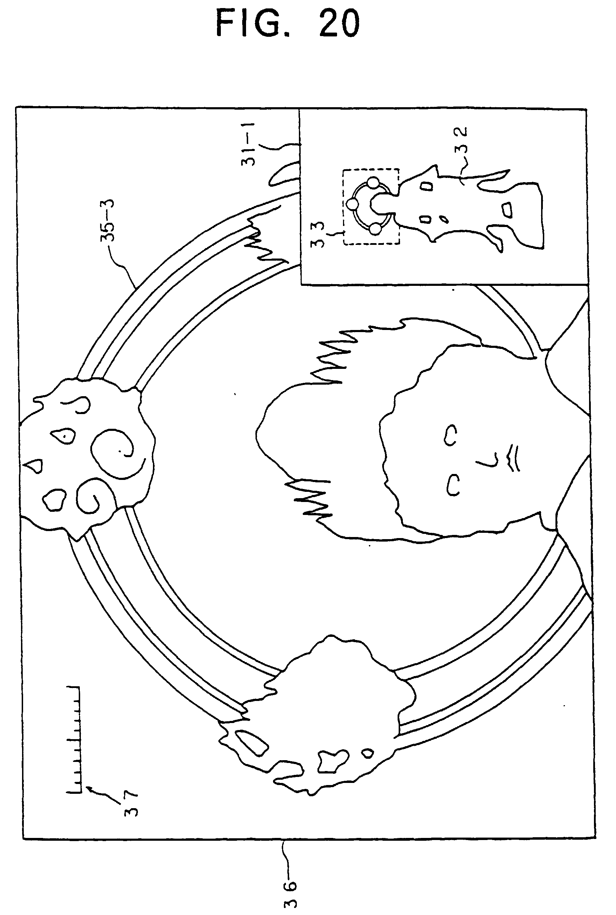

FIG. 20 shows a first-intermediate-resolution file when it is displayed. In the drawing, reference numerals 31, 32, 33, 35, and 36 correspond to those shown in FIGs. 17, 18, and 19. Reference numeral 37 designates a scale.

In the case shown in FIG. 20, the image 32 corresponding to the entirety of Buddha is indicated in the control window 31-1. The display frame 33 indicates a portion of the entire image 32 that correspondences to the image 35 (i.e., a specific image of Buddha 35-3) that is currently displayed on the display screen 36. In other word, the portion of the image surrounded by the display frame 33 is displayed on the display screen 36.

Although a portion of the first-intermediate-resolution image is shown in FIG. 20, the present invention is not limited to such an example. For instance, an image corresponding to a highest-resolution file may also be displayed. As a matter of course, an image of desired resolution between the first-intermediate-resolution file and the second-intermediate-resolution file may also be displayed.

For this reason, in order to enable the operator to easily ascertain the size of the image 35 displayed on the display screen 36, a scale 37 is indicated on the display screen 36. Specifically, in order to enable the operator to readily ascertain the size of, e.g., the head of the Buddha 35-3, the scale 37 is indicated so as to match the size of the image 35 that is currently displayed on the display screen (e.g., the specific image of Buddha 35-3). The size of the scale 37 on the display screen is determined so as to match the size of the image of Buddha 35-3 that is currently displayed on the display screen 36. Since the size of the display frame 33 is determined in the control window 31-1 through computation, the size of the scale on the display screen is readily determined.

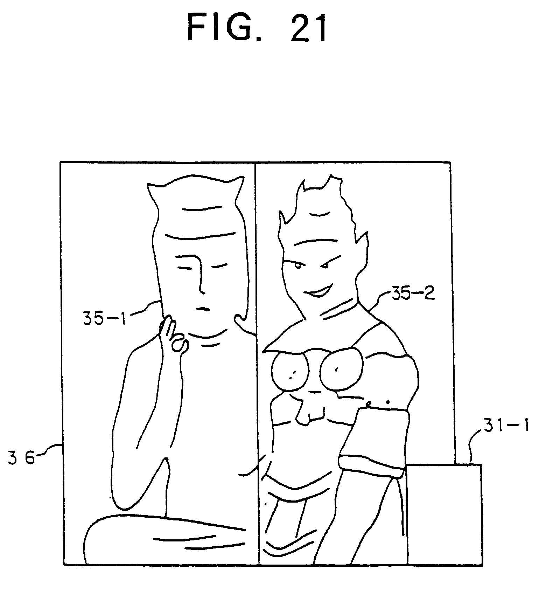

FIG. 21 shows split views of Buddha. In the drawing, reference numerals 31, 35, and 36 correspond to those shown in FIGS. 17 through 20.

It goes without saying that, for example, the image 35 displayed on the display screen 36 in FIG. 18 is not limited to the image shown in FIG. 18; the image may alternatively be displayed while being split in the vertical or horizontal direction or in both vertical and horizontal directions. As a matter of course, as shown in FIG. 21, the images (e.g., Buddha images 35-1 and 35-2) that are split as required may be displayed on a single screen 36 while joined together. As already described with reference to FIG. 3, since the resolution files 11 to 14 are stored while they are split into blocks 16 to 19, split views of an image may be readily produced by fetching the blocks required for display.

With reference to FIGs. 11 and 12, it has already been described that reserved blocks and anticipative blocks are loaded beforehand one after another into the cache memory during the zooming or scrolling operation. In the case shown in FIG. 12I where the preceding block 16(preceding) is currently displayed, the only requirement is to load beforehand the blocks indicated by (a) and (b) of the anticipative block 16(anticipative). As compared to the case where images are displayed one after another or where images, each corresponding to one screen, are loaded beforehand on a per-screen-basis, efficiency of data transmission may be improved significantly. Further, the chance of undesirably loading beforehand data which will become useless can be diminished.

According to the present invention, there are recorded and stored instruction information that is sent by the client 5 in relation to display of a high-definition image; for example, (i) instruction information as to which image (for example, an image of Buddha) has been displayed; (ii) instruction information as to which one of the resolution files shown in FIG. 2 has been used for displaying the image; (iii) instruction information as to how zooming operation (including a zooming scale) or scrolling operations is performed; (iv) instruction information about the coordinate of the block that has been displayed; (v) instruction information as to which one of the resolution files was used for displaying a preceding image and which one of the resolution files was used for displaying a current image; (vi) instruction information as to displayed thumbnail images and a designated image; (vii) instruction information about images that have been displayed for comparison as shown in FIG. 21; and (viii) the identification of the operator.

The instruction information can be readily recorded and stored by only storing details of the operations utilizing the control window by use of the image expansion section 6 and/or the image expansion section 8 shown in FIG. 1.

By means of such a record of information, the computer can ascertain a specific operator's propensity with regard to operation, thereby enabling efficient prediction and an increase in the speed of high-speed display.

Further, when the image 35 that is currently displayed on the display screen 36 is zoomed or scrolled, the operator clicks the mouse while pointing the cursor at the display frame 33 indicated in the control window 31-1. More specifically, when the image is zoomed, zooming is instructed while the display frame 33 is held stationary. When the image is scrolled, the display frame 33 is shifted in a given direction. During the Zooming or scrolling operations, the image that is currently displayed on the display screen 36 is equal in size to the highest-resolution image but has a lower resolution. In short, the image having a lower resolution is zoomed or scrolled.

More specifically, under ordinary conditions, the image 35 is displayed on the display screen 36 with the highest resolution that can be displayed on the display screen. In other words, an image having the best resolution is displayed as the image 35. In some cases, a portion of the Buddha's image as shown in FIG. 20 may be displayed as the image 35. When the image of Buddha is scrolled to, for example, the chest of Buddha, only the resolution of the image 35 displayed on the screen 36 is decreased without involvement of a change in the size of the image 35 (i.e., the image 35 is changed to a more blurred image), for reasons of a limitation on the speed of processing of an image or in order to ensure room for other processing by carrying out image processing more quickly. Since the image 32 displayed in the control window is the entire image of Buddha, the image does not change even during the scrolling operation.

By means of the foregoing processing, the present invention enables display of a high-definition image within five seconds, which would otherwise conventionally require, for example, 300 seconds.

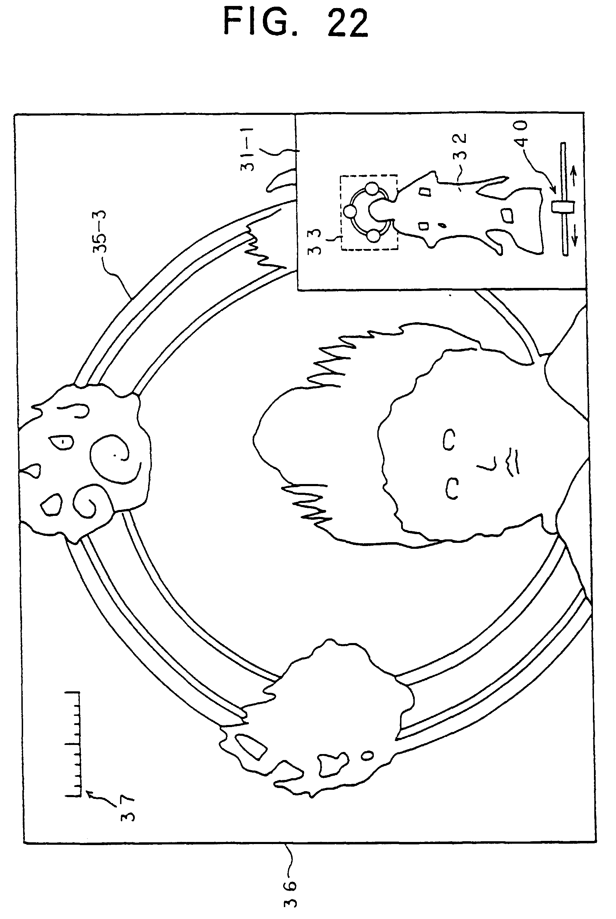

FIG. 22 shows a resolution control knob when it is displayed along with the first-intermediate-resolution-file shown in FIG. 20.

As have been described by reference to FIGs. 2 and 20, the high-definition image display apparatus according to the present invention enables free display of, for example, an image 15 of a desired and arbitrary resolution between the first-intermediate-resolution file and the second-intermediate-resolution file.

As will be explained once again, four types of files 11 through 14 are prepared for one image; for example, an image of Buddha. The highest-resolution file 11 corresponds to an image of 10,000 x 10,000 pixels; the first-intermediate-resolution file 12 corresponds to an image of 5,000 x 5,000 pixels; the second-intermediate-resolution file 13 corresponds to an image of 2,500 x 2,500 pixels; and the lowest-resolution film 14 corresponds to an image of 1,250 x 1,250 pixels.

In this case, the operator of the client 5 may desire indication of, e.g., an image 15 of 3,000 x 3,000 pixels, through actuation of a resolution control knob to be described later. In the following description, this example is referred to as required.

An image 32 corresponding to the entire image of Buddha is displayed in the control window 31-1 in the case shown in FIG. 22, as in the example shown in FIG. 20. The display frame 33 indicates the portion of the image 32 corresponding to the image 35 that is currently displayed on the display screen 36. Further, a resolution control knob 40 is indicated in a lower position of the control window 31-1. The position of the resolution control knob 40 represents the resolution of the image 35 that is currently displayed on the display screen 36. As a result, the operator can ascertain. the resolution of the image 35 that is currently displayed.

The operator of the client 5 can enter an instruction for resolution by moving the resolution control knob 40 in either the right or left direction through use of the mouse. The resolution control knob 40 serving as input means which enables visual setting and input of a resolution (i.e., an arbitrary resolution) for the image to be displayed on the screen of the client 5. The resolution of the image 35 displayed on the display screen 36 and the size of the display frame 33 are automatically changed according to the resolution designated by the operator.

The resolution control knob 40 enables the operator to freely set an arbitrary value for resolution and to perform an entry operation with considerable ease. A resolution can be set in the range from the highest resolution to the lowest resolution. Alternatively, the resolution may be entered by way of a keyboard through use of +/- keys or ten keys.

An infinite number of indications corresponding to the arbitrary-resolution image 15 are considered, and hence these images cannot be prepared beforehand, unlike the intermediate resolution images. Therefore, the arbitrary-resolution image 15 is prepared by diminishing pixels from the file having a resolution greater than a desired resolution, until there is obtained a desired arbitrary resolution. More specifically, the intermediate-resolution image is reduced until a desired arbitrary resolution image is prepared. In the previous case, an image is prepared by diminishing the first-intermediate-resolution file to 3/5 in terms of number of pixels in both the vertical and horizontal directions, and the thus-prepared image is displayed.

In the case of an enlarged image, an image of arbitrary resolution is prepared through interpolation in substantially the same way as the reduced image. Specifically, pixels are added to the file having a lower resolution until there is produced a file having a desired resolution. More specifically, a desired enlarged image is prepared by enlarging the intermediate-resolution image until the image assumes a desired resolution. For example, an enlarged image is prepared by expanding the first-intermediate-resolution file 12 by 5/3 in terms of the number of pixels in both the vertical and horizontal directions, and the thus-prepared image is displayed.

Reducing or enlarging operations (hereinafter referred to simply as "reducing operation") required for displaying the arbitrary-resolution image 15 must be repeated by the number of dots of the display screen. In the high-definition image display apparatus according to the present invention, a high-definition image is indicated on, e.g., a large screen of 1,600 x 1,200 dots. Therefore, the reducing operation must be performed 1.92 million times per screen. The volume of such processing results in a decrease in the speed of generation and display of an arbitrary-resolution image. In contrast, even an arbitrary-resolution file also requires high definition, and hence the accuracy of computation required for correctly displaying an image cannot be deteriorated. Further, there must be prevented an error in computation caused at the time of conversion of coordinates.

For these reasons, the high-definition image display apparatus according to the present invention reduces the size of an image at high speed without involvement of a computation error stemming from conversion of coordinates and without deterioration of computation accuracy, thus preparing and displaying the arbitrary-resolution image 15. For this purpose, the high-definition image display apparatus according to the present invention produces a block correspondence table and a reduction rate conversion table, which will be described later, and uses these tables.

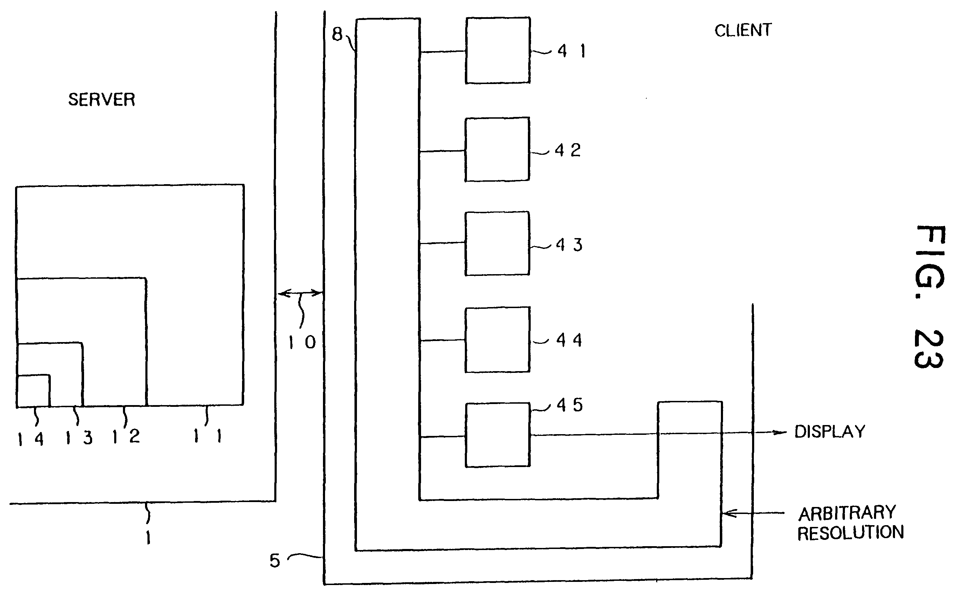

FIG. 23 is an illustration for describing a reducing operation according to the present invention. The reducing operation is primarily executed by the image display section 9 of the client 5 shown in FIG. 1.

In FIG. 23, the image display section 9 of the client 5 comprises a block management table 41 for storing various data used for managing image blocks; a block correspondence table 42 representing relationships between the image blocks and pixels; a reduction rate conversion table 43 for indicating the positions of pixels to be displayed; cache memory 44 for storing the image blocks received from the server 1 through caching operations; and display memory 45 for storing image data to be displayed on the screen of the display device of the client 5. The block management table 41, the block correspondence table 42, and the reduction rate conversion table 43 are prepared by the image display section 9.

The image display section 9 has means for determining, on the basis of an arbitrary resolution, an intermediate-resolution image used as a basis for preparing the arbitrary-resolution image 15. When the operator enters an arbitrary resolution by way of the resolution control knob 40, the image display section 9 determines, on the basis of the thus-entered arbitrary resolution, an intermediate-resolution image serving as a basis for preparation of the arbitrary-resolution image 15.

The image display section 9 has means for calculating a reduction rate from the arbitrary resolution and the intermediate-resolution image serving as a basis for preparation of the arbitrary-resolution image 15, thereby preparing the reduction rate conversion table 43. The image display section 9 refers to an image block corresponding to the currently-displayed image through use of the reduction rate conversion table 43. On the basis of the reference result, the data to be displayed are read from the image block corresponding to the currently-displayed image in the intermediate-resolution image, and the thus-read data are written into the position of the display memory 45 to be displayed. An image is displayed according to the contents of the display memory 45.

The image display section 9 has means for splitting into a plurality of image blocks the intermediate-resolution image used as the basis for generating the arbitrary-resolution image 15, and generating the block correspondence table 42 on the basis of the thus-split image blocks. The image display section 9 receives from the server 1 the image block corresponding to the currently-displayed image in the intermediate-resolution image and retains the thus-received block as a cache of the image block stored in the server 1. Subsequently, the image display section 9 refers to the block correspondence table 42 corresponding to the display block that is currently displayed. On the basis of result of such reference, the reduction rate conversion table 43 is referred to. Further, on the basis of result of such reference, data to be displayed are read from the image block that is cached and retained in the cache memory 44, and the thus-read data are written into the position of the display memory 45 to be displayed.

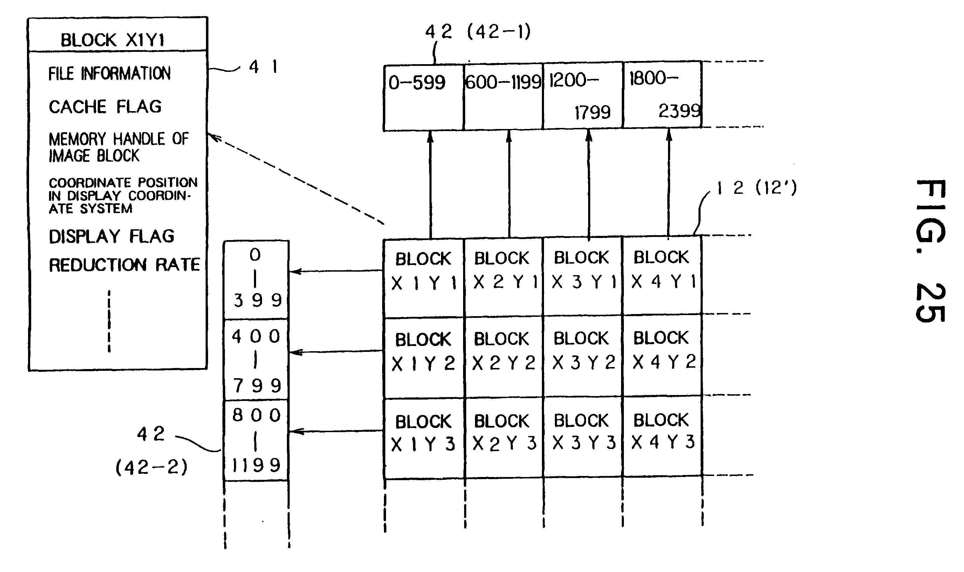

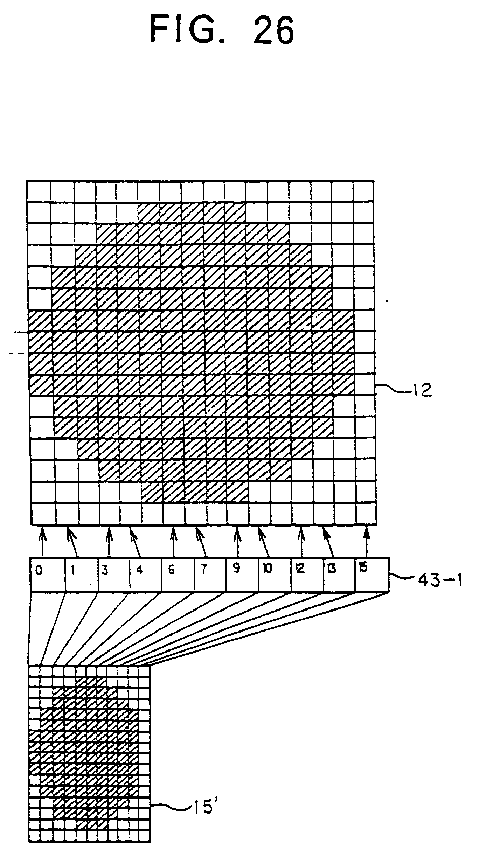

FIGs. 24a to 24D are illustrations for describing the reducing operation according to the present invention. FIG. 25 shows a block correspondence table used for the reducing operation; and FIG. 26 shows a reduction rate conversion table used for the reducing operation.

When a new resolution is entered by way of the resolution control knob 40, the image display section 9 of the client 5 determines an intermediate resolution image serving as a basis for generating the arbitrary-resolution image 15, as shown in FIG. 24A. More specifically, the image display section makes a determination as to which intermediate-resolution file is used in order to produce the arbitrary-resolution image. A reducing operation is selected rather than the enlarging operation in order to prevent the image from becoming coarse through interpolation. Further, in order to prevent generation of a difference between the original image and the arbitrary-resolution image through reduction of pixels, an intermediate-resolution file which is closest to the arbitrary-resolution file is selected. The highest-resolution file 11 or the lowest-resolution file 14 may also be selected.

In the preceding case, as shown in FIG. 24A, the arbitrary-resolution image can be prepared by reduction (diminishment) of pixels. To this end, the first-intermediate-resolution file 12 of 5,000 x 5,000 pixels is closest to the arbitrary-resolution file of 3,000 x 3,000 pixels and is therefore selected. File information as to which file is used (in this case, information indicating that the file 12 is used) is written into the block management table 41.

The image display section 9 splits the thus-selected intermediate-resolution file 12 into a plurality of image blocks. In fact, as indicated by a dotted line shown in FIG. 24B, a virtual image 12' which would be obtained by reading the file 12 from the server 1 is virtually split. At this time, the image blocks are determined by the image display section 9 such as to become optimum for indicating a position 33' designated by the operator by means of pointing the cursor. More specifically, the image display section 9 determines the image blocks such that, to the extent possible, an image at the position to be displayed is included in a single image block without being split into a plurality of image blocks.

According to the result of splitting of the image into the image blocks, the image display section 9 prepares the block management table 41. The block management table 41 is provided so as to correspond to each of the thus-split image blocks and stores various information required for managing the corresponding image blocks.

As shown in FIG. 25, the intermediate-resolution file 12 or the virtual image 12' is split into X1, X2, ... in the X direction, and into Y1, Y2, ... in the Y direction. The thus-split blocks are specified as a block X1Y1, a block X1Y2, etc. The image display section 9 manages the block through use of the corresponding block management table 41.

As shown in FIG. 25, the information to be described in the block management table 41 comprises a memory handle of an image block and a coordinate position in the display coordinate system. Further, the file information and a cache flag to be described later are also written into the block management table 41. As a result of splitting of the image, the image management section 9 sets a display flag in the block management table 41 corresponding to an image block (hatched in FIG. 24B) which is located at a position 33' indicated by the operator. If the display flag is set in the corresponding management table 41, it is understood that the image is currently displayed.

As a result of splitting of the virtual image 12' into a plurality of image blocks, image blocks to which individual pixels of the selected intermediate-resolution file 12 pertain are determined. Accordingly, in both of X and Y directions, there are determined pixels of the selected intermediate-resolution file 12 corresponding to each image block.

On the basis of such determination, the image display section 9 prepares the block correspondence table 42. The block correspondence table 42 comprises the block correspondence table 42-1 for the X direction and the block correspondence table 42-2 for the Y direction. The block correspondence table 42-1 represents, on a per-image-block-basis, the positions of the pixels in the X direction in the selected intermediate-resolution film 12 that correspond to the individual image blocks. The block correspondence table 42-2 represents, on a per-image-block-basis, the positions of the pixels in the Y direction in the selected intermediate-resolution film 12 that correspond to the individual image blocks.

For example, in FIG. 25, the block correspondence table 42-1 represents that pixels 0 to 599 correspond to the image blocks on the first row in the X direction, i.e., X1Y1, X1Y2, ... and that pixels 600 to 1199 correspond to the image blocks on the second row, i.e., X2Y1, X2Y2, ... Similarly, the block correspondence table 42-2 represents that pixels 0 to 399 correspond to the image blocks on the first row in the Y direction, i.e., X1Y1, X2Y1, ... and that pixels 400 to 799 correspond to the image blocks on the second row, i.e., X1Y2, X2Y2, ...

For example, in the previous case, each of 5,000 pixels of the intermediate-resolution file 12 in the X direction correspond to any of the image blocks, and each of 5,000 pixels of the same in the Y direction correspond to any of the image blocks. On the basis of the intermediate-resolution file 12 of 5,000 x 5,000 pixels, the maximum number of pixels represented in the tables 42-1 and 42-2 assumes a value of 5,000.

From the thus-selected intermediate resolution and the entered arbitrary resolution, the image display section 9 calculates a reduction rate for a reducing operation. In the previous case, the reduction rate is 3,000/5,000 = 3/5. This reduction rate is written into the block management table 41.

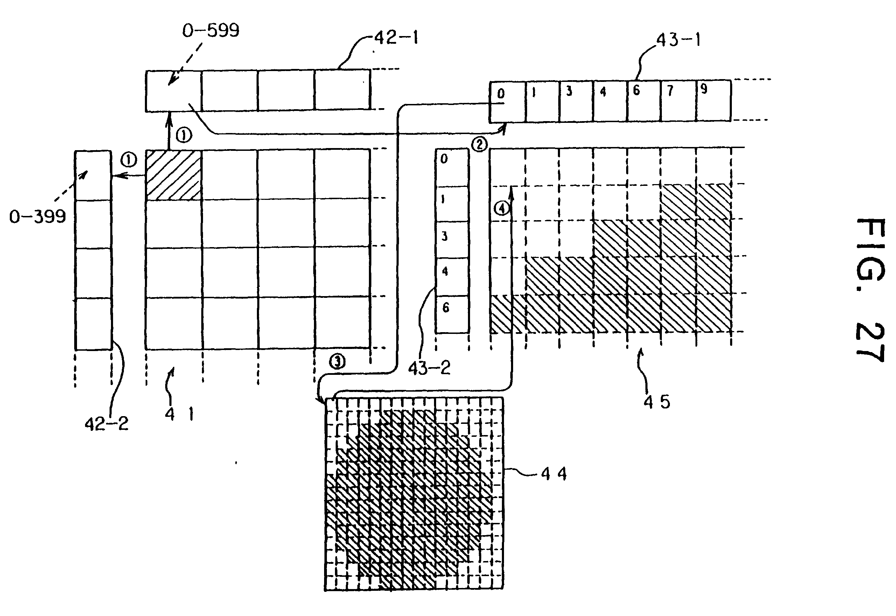

Through use of the reduction rate, the image display section 9 prepares the reduction rate conversion table 43. This reduction rate conversion table 43 comprises a table 43-1 arranged in the X direction and a table 43-2 arranged in the Y direction (see FIG. 27).

As shown in FIG. 26, the reduction rate conversion table 43-1 stores the X-axis positions of the pixels to be actually displayed in the intermediate-resolution file 12, after completion of the reducing operation (i.e., with regard to an arbitrary-resolution image which is newly displayed). More specifically, the positions of the pixels in the selected intermediate-resolution file are stored so as to correspond to the positions of the dots on the actual display screen. Similarly, the reduction rate conversion table 43-2 stores the Y-axis positions of the pixels to be actually displayed on the screen after the reducing operation. The pixels to be actually displayed after the reducing operation are pixels which remain after diminishment during the reducing operation. As a result, the pixels are displayed at the positions of the dots.

For example, as shown in FIG. 26, the reduction rate conversion table 43-1 stores numerical values "0, 1, 3, ..." in ascending order. These numerical values represent the positions of the pixels in the intermediate-resolution file 12. Therefore, as shown in FIG. 26, the 0th pixel, the 1st pixel, the 3rd pixel, ... are maintained without being reduced. Conversely, the 2nd pixel, the 5th pixel, the 8th pixel, ... are diminished. The same applies to the reduction rate conversion table 43-2 (see FIG. 27).

The storage positions in the reduction rate conversion table 43-1 correspond to the storage positions of the display memory 45; more specifically, the X(row) addresses. Accordingly, the storage positions in the reduction rate conversion table 43-1 correspond to the positions on the actual display screen in the X direction. The same applies to the reduction rate conversion table 43-2 (see FIG. 27).

Therefore, the reduction rate conversion table 43-1 shown in FIG. 26 represents that the 0th pixel, the 1st pixel, the 3rd pixel ... of the intermediate-resolution file 12 are to be displayed in the 1st dot, the 2nd dot, the 3rd dot, ... on the actual display screen in the X-axis direction thereof. The same applies to the reduction rate conversion table 43-2. Consequently, the pixels to be displayed are determined by the values stored in the reduction rate conversion tables 43-1 and 43-2. The positions on the actual display screen where the pixels are displayed are determined by the positions in the reduction rate conversion tables 43-1 and 43-2 where the values are stored.

As shown in FIG. 26, an image 15' formed by displaying only the pixels in the positions indicated by the reduction rate conversion tables 43-1 and 43-2 corresponds to an image reduced with an arbitrary resolution. In FIG. 26, the concept of reduction is exaggerated.

The values stored in the reduction rate conversion table 43 are calculated by multiplication of (the reciprocal of the reduction rate) by (the position of the pixel in the actual screen display (or coordinate value)) for each of the pixels on the actual display screen. Here, any remainder is discarded.

For example, in the previous case, for the 0th pixel, there is obtained 5/3 x 0 = 0, whereby 0 is stored in the 0th position of the reduction rate conversion table 43. For the 1st pixel, there is obtained 5/3 x 1 = 1.66 and the remainder 0.66 is discarded, whereby 1 is stored in the 1st position of the reduction rate conversion table 43. For the 2nd pixel, there is obtained 5/3 x 2 = 3.33 and the remainder 0.33 is discarded, whereby 3 is stored in the second position of the reduction rate conversion table 43.

In the previous case, the intermediate-resolution image serving as the basis for preparation of the arbitrary-resolution image is 5,000 x 5,000 pixels. Provided that the display screen has a size of 1,200 x 600 pixels, computation is performed 1,200 times with regard to the X-axis direction, 600 times with regard to the Y-axis direction, and a total of 1,800 times. As a result, the pixels among the 5,000 pixels in the X-axis direction which are displayed (i. e., the pixels which are maintained without being subtracted) and the positions of the pixels are determined, and the same determination is made with regard to the 5,000 pixels in the Y-axis direction.

The maximum number of operations required for the reducing operation performed in the high-definition image display device according to the present invention is dependent on the resolution of the display screen. More specifically, in the previous case, the highest-resolution file 11 has a size of 10,000 x 10,000 pixels. Provided that the size of the screen is 1,200 x 600 pixels, the total number of operations required is 1,800. Therefore, the arbitrary-resolution image can be prepared at considerably high speed through repetition of reducing operations in a number significantly smaller than the 1.92 million operations mentioned previously.

For example, even if the highest resolution is increased to 16,000 x 16,000 pixels, the maximum number of operations required for reducing operations is 1,600 (in the X-axis direction) and 600 (Y-axis direction) = 1,800 times. Specifically, even if the resolution is increased by a factor of 2.56 times, the maximum number of operations is not changed. consequently, the greater the highest resolution, the more noticeable the effect of an increase in the speed of reducing operations.

As mentioned previously, after completion of preparation of the block management table 41, the image display section 9 makes a request to the server 1 for transmitting an image block (one or more blocks) corresponding to the currently-displayed image (the image provided in the display frame 33 shown in FIG. 22) in the intermediate-resolution image. The currently-displayed image represents an image displayed in the display frame 33 shown in FIG. 22 or an image block corresponding to the position 33' indicated by the operator. More specifically, the image display section 9 makes a request for transmitting an image block hatched in FIG. 24B.

The image display section 9 adds the block management table 41 to the transmission request. As a result, the image management section 7 of the server 1 can find the details of an image block to be transmitted, and the image block can be transmitted without fail. For instance, from the file information and the memory handle of the image block stored in the block management table 41, the position of the image block in the memory of the server 1 can be determined. More specifically, the nature of the image block required to be transmitted, the file in which the image block is stored, and the location on the memory where the image block is stored can be determined. For this purpose, the client 5 retains beforehand the hold information 20 to 23 described by reference to FIG. 3.

Upon receipt of the transmission request from the client 5, the image management section 7 transmits the image block to the client 5 that has sent the request, on the basis of the block management table 41 added to the request. The transmission of the image block is carried out in the same fashion as mentioned previously.

Upon receipt of the image block of the intermediate-resolution image from the server 1, the image display section 9 decrypts and expands the thus-received image block and retains the thus-expanded image block in the memory 45 through caching operations, as shown in FIG. 24C. In fact, as described by reference to FIG. 12, an image block in which no display flag is set is also transmitted through a anticipative control operation and retained in the cache memory 45 through caching operations.

The image display section 9 sets a flag (hereinafter referred to as a "cache flag") representing that the image block is present in the client 5 (i.e., the cache memory 45) in the block management table 41 corresponding to the image block held in the cache memory. The cache flag is also stored in the corresponding block management table 41. Accordingly, match is not necessarily present between the cache flag and the display flag.

After the pre-processing operation set forth, the image display section 9 performs a displaying operation (i.e., a main-processing operation) with regard to the image block that is now being displayed. At this point in time, the image is not yet reduced in size. More specifically, the contents of the display memory 45 such as those shown in FIG. 24C are not yet prepared. The reducing operation is completed by combination of the previously-described pre-processing operations and the main-processing operations to be described below.

The image display section 9 refers to the block correspondence table 42 corresponding to the block management table 41 which corresponds to the image block that is now being displayed. On the basis of such reference, the image display section refers to the reduction rate conversion table 43, and reads the data to be displayed after reducing operations (i.e., pixels) from the cache memory 44. The thus-read data are written into the positions in the display memory 45 where the data are to be displayed. According to the contents of the display memory 45, the image display section 9 displays the image on the screen.

More specifically, as shown in FIG. 27, the image display section 9 searches the block management table 41 and finds an image block for which the display flag has already been set (i.e., the block hatched in the drawing). This image block is now being displayed.

Next, the image display section refers to the block correspondence tables 42-1 and 42-2 corresponding to the image blocks [see (1) in the drawing]. As a result, the image display section becomes aware of the range of pixels in both the X-axis and Y-axis directions in which the pixels correspond to the image blocks. By use of the display flag, the positions to be referred to can be referred to at high speed without involvement of retrieval of the entire block correspondence table 42.

On the basis of the result of reference to the tables 42-1 and 42-2, the reduction rate conversion tables 43-1 and 43-2 are referred to [see (2) in the drawing]. As a result, if the result of reference to the block correspondence table 42-1 represents "0-599," correspondence between the pixel range and the contents of the reduction rate conversion table 43-1 is established. Specifically, of the pixels in this range, pixels indicated by the reduction rate conversion table 43-1 are displayed. The same applies to the block correspondence table 42-2 and the reduction rate conversion table 43-2. By use of the result of reference to the block correspondence table 42, the pixels that are to be displayed through use of the reduction rate conversion table 43 can be read from the cache memory 44 [(3) in the drawing] at high speed.

On the basis of results of reference to the tables 42-1 and 42-2, the position in the image block corresponding to the position 33' indicated by the operator can be referred to at high speed through use of the block correspondence table 42. Of the image blocks corresponding to the position 33', the minimum positional X-coordinate and Y-coordinate of the pixel are determined to be a relative positional coordinate (0,0) used in the following processing. The relative positional coordinate is determined with regard to the other pixels.

According to the contents in the reduction rate conversion tables 43-1 and 43-2, the data to be displayed (i.e., pixels) are read from the cache memory 44 [(3) in the drawing]. The cache memory 44 shown in FIG. 27 stores the images relating to, e.g., the head of Buddha. For example, if the reduction rate conversion tables 43-1 and 43-2 represent the contents as shown in FIG. 27, the first value "0" of the reduction rate conversion table 43-1 and the first value "0" of the reduction rate conversion table 43-2 are used to read the pixel from the relative positional coordinate (0,0) in the image block. Through use of the reduction rate conversion table 43, a required pixel can be read by reference only to the table 43 without involvement of performing reduction operations every time a pixel is read. The amount of operation required for preparing the reduction rate conversion table 43 is merely equal to the amount of operation required for reading pixels from one row and one column.

The thus-read pixels are written into the positions on the display memory 45 where the pixels are to be displayed [(4) in the drawing]. For example, the pixel assuming a relative positional coordinate (0,0) is calculated through use of the values at the first positions of the reduction rate conversion tables 43-1 and 43-2, and hence the pixel is stored in the corresponding position of the display memory 45. More specifically, the pixel is stored in the dot which is the top in both the X-axis and Y-axis directions of the display memory 45. According to the contents of the display memory 45, the image display section 9 displays the image on the screen. Through use of the reduction rate conversion table 43, the position of the pixel can be determined by use of only the position in the table 43, without involvement of calculation of the position every time the pixel is stored.

The foregoing processing is repeated for each of the dots (or bits) of the display memory 45 of a bit-map display. At this time, for example, the pixels in the relative positional coordinates (0,0), (0,1), (0,3) ... in the image block, i.e., the pixels having the same X address, are continuously read and written, through use of the first value "0" of the reduction rate conversion table 43-1 and the values "0, 1, 3, ..." of the reduction rate conversion table 43-2. In other words, raster scanning is carried out.

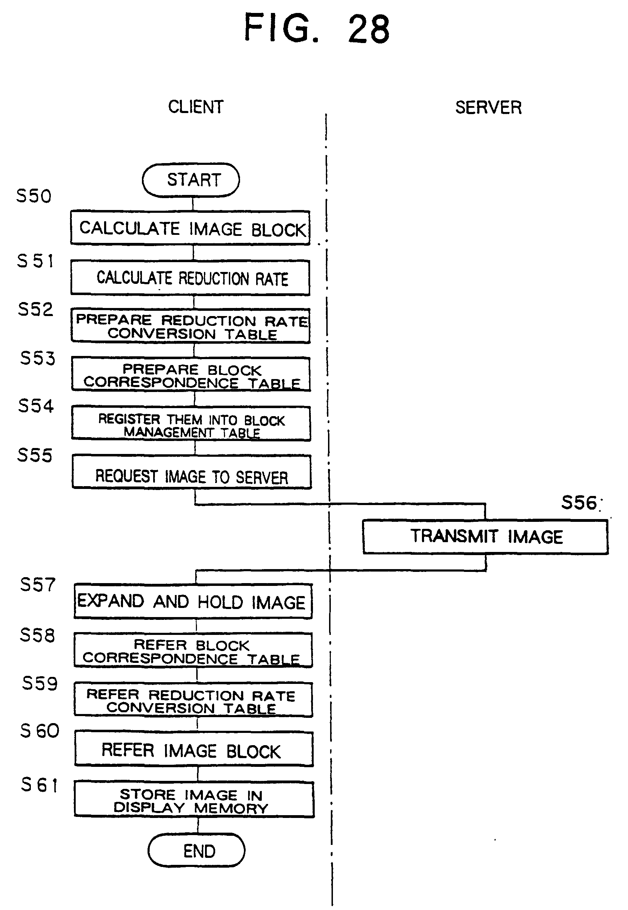

FIG. 28 shows the flow of preparation of an arbitrary-resolution image.
(Step S50): When an arbitrary resolution is newly entered by way of the resolution control knob 40, the image display section 9 of the client 5 calculates an image block required for displaying the arbitrary-resolution image, on the basis of the arbitrary resolution. More specifically, the intermediate-resolution image used for preparing the arbitrary-resolution image is determined and is split into image blocks.
(Step S51): The image display section 9 calculates a reduction rate on the basis of the arbitrary resolution.
(Step S52): The image display section 9 prepares the reduction rate conversion table 43 on the basis of the thus-calculated reduction rate.
(Step S53): The image display section 9 prepares the block correspondence table 42 on the basis of the thus-calculated image block.
(Step S54): The image display section 9 registers a required image block into the block management table 41.
(Step S55): The image display section 9 adds the block management table 41 to a transmission request and sends the request to the image management section 7 of the server 1 for transmitting an image.
(Step S56): The image management section 7 refers to the block management table 41 added to the transmission request, compresses and encrypts data regarding the image block of the file required for preparing the arbitrary-resolution image, and transmitting the data to the client 5.
(Step S57): The image expansion section 8 of the client 5 expands and decrypts the thus-received block of data and retains the block of data in the cache memory 45 as a cache of the image block stored in the server 1.
(Step S58): The image display section 9 of the client 5 refers to the block management table 41 and refers to the block correspondence table 42 of the image block that is now being processed.
(Step S59): The image display section 9 refers to the reduction rate conversion table 43, on the basis of the result of reference to the block management table 41.
(Step S60): The image display section 9 refers to the image block on the basis of result of reference to the reduction rate conversion table 43.
(Step S61): On the basis of result of reference to the image block, the image display section 9 stores the image data to be displayed into the position in the display memory 45 where the data are to be displayed. Subsequently, the image display section 9 displays an image according to the contents of the display memory 45.

As has already been described by reference to FIGs. 11 and 12, a plurality of image blocks preceding and subsequent to the image that is now being displayed are stored in the cache memory 44 through caching, in preparation for shifting of an image (i.e., scrolling operations). Consequently, when there is issued an instruction for scrolling the arbitrary-resolution image, the image can be smoothly scrolled in completely the same way as the predetermined intermediate-resolution image.

In this case, the required image blocks are already present in the cache memory 44, and the cache flag is set in the corresponding block management tables 41. When the image is scrolled, the image display section 9 refers to the block management table 41. If the cache flag is set in the block management table 41, the image display section does not make a request to the server 1 for transferring the image block. The arbitrary-resolution image 15 to be displayed is produced by use of the image block stored in the cache memory 44.

Since the resolution is not changed in this case, the block correspondence table 42 and the reduction rate conversion table 43 are already prepared. Accordingly, the arbitrary-resolution image 15 can be produced at considerably high speed (i.e., a speed at which the operator does not become aware of preparation of the image) in conjunction with omission of data transmission.

When the operator changes the resolution, the processing required for determining the intermediate-resolution image used as a basis for preparing an arbitrary-resolution image whose resolution has been changed is repeated in the same manner. Even in this case, there may be a case where the required image block is present in the cache memory 44 and the cache flat is set in the corresponding block management table 41. In other words, the range of change in resolution is small, and there is no change in the intermediate-resolution image used as a basis for preparation of an arbitrary-resolution image.

In this case, after the resolution has been changed, the image display section 9 determines an intermediate-resolution image used as a basis for preparing an arbitrary-resolution image and does not make a request to the server 1 for sending the image block. The arbitrary-resolution image 15 to be displayed is prepared through use of the image block stored in the cache memory 44.

There is no change in the block management table 41 and the block correspondence table 42, and there is no need to make a request to the server 1 for transmission of an image. Only the reduction rate conversion table 43 is newly prepared. Thus, a new arbitrary-resolution image 15 can be prepared at considerably high speed.

Although the high-definition image display apparatus according to the present invention has been described in detail by reference to its embodiments, various modifications of the present invention may be conceivable within the scope of the invention. A medium for storing a program by which a computer, or the high-definition image display apparatus, carries out the aforementioned processing operations is also to be understood to fall within the scope of the present invention.

### Industrial Applicability

As has been described above, the high-definition image display apparatus according to the present invention enables high-speed transmission and processing of a mega-sized high-definition image, for example, an image of 10,000 x 10,000 pixels, and can be applied to, e.g., the study of images of Buddha.

Further, the present invention enables the high-definition image display apparatus to set the resolution of the mega-sized high-definition image to an arbitrary value and enables high-speed preparation of the image having the arbitrary resolution.

The present invention can provide a medium for storing a program by which a computer, or the high-definition image display apparatus, executes the processing operations set forth and enables ready provision of the program stored in a storage medium such as a flexible disk.

## Claims

1. A high-definition image display apparatus which displays a mega-sized high-definition image on a computer display and which includes a server and a client that operate in a coordinated manner, the display apparatus comprising:
means for storing an image in the server in the form of a set of image data for several levels of resolution each of which is obtained through division of the image into a matrix as well as through compression and encryption; and
input means for enabling visual performance of operations for specifying an image to be displayed on the screen of the client, zooming in/out, and scrolling the image.

2. The high-definition image display apparatus as defined in Claim 1, further comprising:
means which, at the time of transfer of image data from the server to the client, compares a load exerted on a CPU of the server with a load exerted on a CPU of the client and dynamically determines whether the server or the client would more efficiently expand a compressed image data block, wherein the image data are transferred by determining a resolution and an split image data block which are optimum for display.

3. The high-definition image display apparatus as defined in Claim 1, wherein when the server expands the compressed image data block, only the portion of image data required for display is clipped, re-compressed, and encrypted.

4. The high-definition image display apparatus as defined in Claim 1, wherein the client comprises:
means for caching the image data that are used; and
prediction means for predicting a split image data block, which will be required, before scrolling and zooming operations and making a request to the server for the thus-predicted split image data block.

5. The high-definition image display apparatus as defined in Claim 1, further comprising:
means which, at the time of displaying a high-definition image on the screen of the client, reduces an image to be displayed, displays the thus-reduced image in a control window, and carries out continuous scrolling or zooming operations; and
means which displays a list of thumbnail images in the control window and switches among the images.

6. The high-definition image display apparatus according to Claim 1, wherein, at the time of displaying a high-definition image on the screen of the client, a ruler-like scale is displayed on the image, thereby rendering measurement of size of the image easy.

7. The high-definition image display apparatus as defined in Claim 1, further comprising:
means which, at the time of displaying a high-definition image on the client screen, splits the screen into n areas and enables individual manipulation of n images.

8. The high-definition display system as defined in Claim 1, further comprising:
means which, at the time of displaying a high-definition image on the screen of the client, records and/or reproduces a display field.

9. The high-definition display system as defined in Claim 1, wherein when scrolling or zooming operation is performed within a control window of the client, an image is displayed on the display screen through use of low-resolution image data.

10. The high-definition display system as defined in Claim 1, further comprising:
means for calculating a reduction rate and preparing a reduction rate conversion table, on the basis of the arbitrary resolution and an intermediate resolution of an intermediate-resolution image that is used for preparing the arbitrary resolution image from the arbitrary resolution;
wherein
an image block corresponding to the image that is currently displayed is referred to, through use of the reduction rate conversion table;
data to be displayed are read, on the basis of reference results, from the image block corresponding to a currently-displayed image in the intermediate-resolution image, and the data are written into the position of display memory to be displayed; and
an image is displayed on the screen according to the contents of the display memory.

11. The high-definition image display apparatus as defined in Claim 10, further comprising:
means for splitting into a plurality of image blocks the intermediate resolution image used for producing the arbitrary resolution image and preparing block correspondence tables on the basis of the thus-split image blocks, wherein
a request is made to the server for transmitting image blocks corresponding to the currently-displayed image in the intermediate-resolution image;
an image block corresponding to the currently-displayed image within the intermediate-resolution image is received from the server and is retained;
a bloc correspondence table corresponding to the image block that is currently displayed is referred to;
the reduction rate conversion table is referred to on the basis of the reference result; and
data to be displayed are read from the retained image block on the basis of reference result and are written into the position of the display memory to be displayed.

12. The high-definition image display apparatus as defined in Claim 11, further comprising:
means for determining, on the basis of the arbitrary resolution, an intermediate-resolution image used for producing the arbitrary-resolution image; and
input means which enables entry of an arbitrary resolution for an image to be displayed on the screen of the client, wherein
the intermediate-resolution image used for producing the arbitrary-resolution image is determined on the basis of the thus-entered arbitrary resolution.

13. The high-definition image display apparatus as defined in Claim 11, wherein, in a case where an image is scrolled, if image blocks required for scrolling the image are already retained, data to be displayed are read from the image blocks that are already retained, without transmission of a request to the server for transmission of the image blocks.

14. The high-definition image display apparatus as defined in Claim 11, wherein, in a case where the resolution is changed, the intermediate-resolution image is determined; and if there is no change in the intermediate resolution, the data to be displayed are read from the image blocks that are already retained, without a request being made to the server for transmission of the image blocks.

15. The high-definition image display apparatus as defined in Claim 10, further comprising:
input means for enabling entry of an arbitrary resolution for an image to be displayed on the screen of the client.

16. A program storage medium for storing a program to be executed by a high-definition image display apparatus which displays a high-definition mega-sized image on a computer display and which includes a server and a client that operate in a coordinated manner, the program comprising:
processing for storing an image in the server in the form of a set of image data for several levels of resolution each of which is obtained through division of the image into a matrix as well as through compression and encryption; and
processing for enabling visual performance of operations for specifying an image to be displayed on the screen of the client, zooming in/out, and scrolling the image.

17. A program storage medium for storing a program to be executed by a high-definition image display apparatus which displays a high-definition mega-sized image on a computer display and which includes a server and a client that operate in a coordinated manner, the program comprising:
processing for storing an image in the server in the form of a set of image data for several levels of resolution each of which is obtained through division of the image into a matrix as well as through compression and encryption;
processing for enabling visual performance of operations for specifying an image to be displayed on the screen of the client, zooming in/out, and scrolling the image;
processing for determining, on the basis of an arbitrary resolution, of an intermediate-resolution image used for producing the arbitrary-resolution image;
processing for splitting the intermediate-resolution image into a plurality of image blocks and for preparing bloc correspondence tables on the basis of the thus-split image blocks;
processing calculating, on the basis of the arbitrary resolution and the intermediate resolution, a reduction rate, and producing a reduction rate conversion table;
processing for making a request to the server for transmitting image blocks corresponding to the currently-displayed image in the intermediate-resolution image;
processing for receiving from the server an image block corresponding to the currently-displayed image within the intermediate-resolution image and retaining the thus-received image block;
processing for referring to a block correspondence table corresponding to a block management table corresponding to the image block that is currently displayed;
processing for referring to the reduction rate conversion table on the basis of the reference result;
processing for reading data to be displayed from the retained image block on the basis of reference result and writing the data into the position of the display memory to be displayed; and
processing for displaying the image on the screen according to the contents of the display memory.
